# EUROPEAN PATENT SPECIFICATION

(11) **EP 2 173 084 B1**
(45) Date of publication and mention of the grant of the patent: **10.04.2019**
(21) Application number: 09153367.9
(22) Date of filing: 20.02.2009
(51) Int. Cl.: H04M 3/42, H04M 3/46, H04M 3/436

(54) **CALL ROUTING TO A PLURALITY OF DESTINATION DEVICES ACCORDING TO LOCATION AND/OR PRESENCE INFORMATION**
LEITWEGLENKUNG ZU EINER MEHRZAHL VON ZIELENDGERÄTEN ABHÄNGIG VOM ORT UND/ODER PRÄSENZINFORMATIONEN
ROUTAGE D'APPELS À UNE PLURALITÉ DE DISPOSITIFS DESTINATIONS SELON LA LOCALISATION ET/OU LES INFORMATIONS DE PRÉSENCE

(30) Priority: 02.10.2008 WO PCT/US2008/078544
(43) Date of publication of application: 07.04.2010
(73) Proprietor: BlackBerry Limited, Waterloo, ON N2K 0A7 (CA)
(72) Inventor: Gisby, Doug, Atlanta, Georgia 30350 (US); James, Robert J., jr., Rd. Leawood, Kansas 66209 (US); Gray, Michael, Glen Ridge, New Jersey 07028 (US)
(74) Representative: Fennell, Gareth Charles

(56) References cited:
- WO-A1-2006/043135
- WO-A2-2005/079160
- US-A1- 2003 223 570
- US-A1- 2008 152 123
- US-B1- 7 260 403

## Description

### RESERVATION OF COPYRIGHT

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

### BACKGROUND OF THE INVENTION

It has become relatively common for individuals to possess a number of different devices through which they communicate. For example, a person may have a home telephone, a wireless telephone, a pager, a personal digital assistant (PDA), and an office telephone to name a few. As the population becomes increasingly mobile, making contact with a person through one of these communication devices has become more difficult.

Call forwarding is one method of addressing this problem. Certain telephone systems allow users to enter another number to which a call is forwarded if not answered by a specified number of rings. This should allow an individual with multiple telephone devices to forward the call to such devices until the telephone at which the individual is located finally rings. However, if several telephones are involved, this approach becomes complicated. Moreover, it requires the calling party to remain on the line for a significant period of time if the call is to be forwarded multiple times. Furthermore, it is necessary that call forwarding capabilities exist on each of the individual's telephones. In addition, this approach requires that all telephones involved be reprogrammed each time an individual desires to initiate call forwarding.

A significant drawback to this forwarding strategy is that, in each leg of the forwarded call, the calling party is terminated on the last device or network in the chain. It follows that the final number in the forwarding scheme is responsible for all available enhanced services or voicemail available to the caller. Accordingly, although a call may have been initially placed to an office telephone equipped with voicemail and/or operator assist, all such enhanced services of the corporate network are lost once the call is forwarded off the corporate PBX (e.g., to the user's wireless telephone).

Travel can also exacerbate the difficulty of establishing communication with an individual having access to multiple telephone devices. Upon checking into a hotel, the telephone in a traveler's hotel room becomes available as yet another potential means of contact. Unfortunately, this forces a calling party to decide whether to attempt to contact the traveler through his or her room telephone or other telephone device (e.g., wireless telephone or pager). If the traveler does not answer the called telephone, the calling party then must decide whether to leave a message (unaware of when, or if, the message will be retrieved) or instead attempt to reach the traveler via his or her other telephone.

Likewise, if the traveler is expecting an important call but is unsure whether it will be placed to his room telephone or wireless telephone, the traveler may feel compelled to remain within his room until the call has been received. In addition, if the traveler's wireless telephone does not support certain types of long distance calls (e.g., to various foreign countries), the traveler may be able to place certain types of calls only from his or her hotel room. The same problems arise when the traveler visits another office or enterprise having their own enterprise telecommunications network.

The office telephone is the primary point of contact of most business people. Typically, corporations invest significantly in their office telephone infrastructure, which often includes voicemail, paging and unified messaging systems. In addition, most corporations have negotiated contracts with their telephone carriers (e.g., local and long distance carriers) to ensure that they obtain the lowest possible rates for calls placed via their corporate network. However, because the corporate workforce is becoming increasingly mobile, more business people are using wireless telephones or devices to conduct their business when they are out of the office. This has resulted in corporations spending a larger portion of their telecommunications budget on wireless communications, with far less favorable negotiated rates than the rates of their corporate network. In addition, wireless communication systems often lack the enhanced conveniences (e.g., interoffice voicemail, direct extension dialing, etc.) that corporate users have come to expect in the office environment.

WO2006/043135 invention provides call processing for an incoming call based on the relative location of the user for which the call is intended. If the user is at a certain location, the incoming call is routed to one or more telephony devices associated with the user or location based on whether the user is at the location. If the user has multiple telephony devices associated with a given location and the user is at the location, an incoming call may be routed to one or more of the telephony devices. If the user is not at the location, the incoming call may proceed in normal course or may be processed as desired based on the user not being at the location. Different telephony devices may be associated with different locations, and different call processing rules may be implemented based on the location of the user.

US7260403 describes a system and method for carrying out a dynamic-routing service is provided. The system includes a service control point ("SCP") that is operable to provide routing instructions for the plurality of subscriber terminals. And each of the plurality of subscriber terminals has a subscriber address and an associated call history. In carrying out a dynamic-routing service, the SCP receives a request for routing instructions for terminating a voice call to a call-subscriber address of the plurality of subscriber addresses. Responsively, the SCP selects from the plurality of subscriber addresses a delivery address for terminating the voice call to based on the call histories associated with the plurality of the subscriber addresses. After selecting the delivery address, the SCP develops routing instructions for terminating the voice call to the delivery address, and then provides the routing instructions for terminating the voice call to the delivery address.

US2003/223570 describes a method for routing calls in a communication system comprising a network and a plurality of terminals associated with a single subscriber identity, the method comprising: receiving a request to establish a call from a first terminal to the subscriber identity; retrieving from a subscriber information store a set of weighting parameters fro the subscriber identity, each of the terminals associated with the subscriber having at least one of the weighting parameters of the set associated with it; determining an order in which to route the call to the terminals based on the weighting parameters; and routing the call to the terminals in that order until the call is terminated or is answered by one of the terminals.

The present invention is set out in the independent claims, and some optional features are set out in the claims dependent thereto. Embodiments of the following description not covered by the claims are to be regarded merely as examples.

### BRIEF DESCRIPTION OF THE DRAWINGS

FIG. 1 illustrates an example of a telecommunication system constructed in accordance with an embodiment disclosed herein.
FIG. 2 illustrates a server in accordance with an embodiment disclosed herein.
FIG. 3 illustrates a server in accordance with another embodiment disclosed herein.
FIG. 4 illustrates a processor module in accordance with an embodiment disclosed herein.
FIG. SA illustrates another telecommunication system constructed in accordance with an embodiment disclosed herein.
FIG. 5B illustrates an example page allowing a user to associate a plurality of devices to a single extension in accordance with an embodiment disclosed herein.
FIGS. 5C-5F illustrate several example pages of a user profile in accordance with an embodiment disclosed herein.
FIG. 5G show a line flow diagram illustrating an example of the operations performed by embodiments described herein.
FIG. 5H illustrates an example of notification and user options displayable on a remote device.
FIG. 6A is a flowchart illustrating an example operation of a system constructed in accordance with an embodiment disclosed herein.
FIG. 6B is a flowchart illustrating another example operation of a system constructed in accordance with an embodiment disclosed herein.
FIG. 6C is a flowchart illustrating yet another example operation of a system constructed in accordance with an embodiment disclosed herein.
FIG. 7 is a flowchart illustrating an example operation of a system constructed in accordance with an embodiment disclosed herein.
FIG. 8 is a block diagram of an exemplary mobile device constructed in accordance with an embodiment disclosed herein.
FIG. 9 is a block diagram of an exemplary communication subsystem component of the mobile device in accordance with an embodiment disclosed herein.
FIG. 10 is a block diagram of an exemplary node of a wireless network in accordance with an embodiment disclosed herein.
FIG. 11 is a block diagram illustrating components of a host system in one exemplary configuration for use with the wireless network of FIG. 10 and the mobile device of FIG. 8.

### SUMMARY OF THE INVENTION

Specific embodiments and applications related to the above description include, but are not limited to, a method of routing a telephone communication. The method includes detecting an incoming telephone call to a primary telephone number; retrieving location or presence information associated with a user associated with the primary telephone number; and routing, based on the location or presence information, the telephone call simultaneously to each of a plurality of telephony devices associated with the user that are determined to be proximate the user.

An additional embodiment and application includes a method of routing a telephone communication. The method includes detecting an incoming telephone call to a primary telephone number; retrieving location or presence information associated with the user associated with the primary telephone number; determining, based on the location or presence information, an ordering of a plurality of telephony devices associated with the user to prioritize telephony devices determined to be proximate to the user; and sequentially routing the telephone call according to the determined ordering of telephony devices until the call is answered.

As is described above, a telecommunication system is also provided. The system includes a computer readable storage medium having a database comprising a plurality of user profiles, each profile being associated with a respective telephone extension of the system, and a plurality of user call patterns associated with each extension; and a processor configured to route an incoming telephone call placed to one of the telephone extensions by: detecting the called extension from the incoming telephone call, retrieving location or presence information associated with the user associated with the called extension, optionally retrieving a call pattern of a user associated with the called extension using the detected called extension as an index into the database; and selecting, based on the location or presence information and the optionally retrieved call pattern, which of a plurality of telephony devices associated with the user determined to be proximate the user to route the incoming telephone call to.

Another embodiment provides a telecommunications server that includes means for detecting an incoming telephone call to a primary telephone number, retrieving location or presence information associated with a user associated with the telephone number, and determining, based on the location or presence information, an ordering of a plurality of telephony devices associated with the user to prioritize telephony devices determined to be proximate to the user; and muting the telephone call to the ordering of telephony devices in series, wherein the location or presence information comprises location information obtained from the at least one electronic device or from a service provider associated with the at least one electronic device and the determining step further includes analyzing the location information obtained from the at least one electronic device or service provider to determine a destination of the user and prioritizing any telephony devices associated with the destination.

Another application and embodiment provides a telecommunications server that is configured to detect an incoming telephone call to a primary telephone number and use the primary telephone number to retrieve user historical and transient call patterns. The server is further configured to retrieve location or presence information associated with the user associated with the called extension; and toselect, based on the retrieved call patterns and location or presence information, which of a plurality of telephony devices associated with the user determined to be proximate the user to route the incoming telephone call to..

In another embodiment, a telecommunication system is provided. The system includes a server computer having a database comprising a plurality of user profiles, where each profile is associated with a respective telephone extension of the system, a plurality of user call patterns associated with each extension, and location or presence information associated with the user. The user call patterns may be one of historical call patterns and transient call patterns. The server is configured to route an incoming telephone call placed to one of the telephone extensions. The server is configured to detect the called extension from the incoming telephone call, retrieve a user historical call pattern using the detected called extension as an index into the database, and retrieve, if available, historical and transient call information as well as location or presence information using the detected called extension as an index into the database. The server is further configured to route the call, based on the retrieved historical call pattern and any location or presence call information, to a first telephone number.

### DETAILED DESCRIPTION OF THE INVENTION

Example embodiments and applications will now be described. Other embodiments may be realized and structural or logical changes may be made to the disclosed embodiments. Although the embodiments disclosed herein have been particularly described as applied to a business or office environment, it should be readily apparent that the embodiments may be embodied for any use or application having the same or similar problems.

Embodiments disclosed herein relate to a telecommunication system that can selectively establish communications with one of a plurality of telephony devices associated with a particular telephone number. Moreover, the system allows remote devices to perform as a functional standard office telephone for both inbound and outbound communications. The system also has a processor configured to send a data signal via electronic mail (email), text messaging, or other forms of data communications to one or more remote devices without any user interaction. The data signal causes a processor and a remote device to execute a series of steps designed to route incoming and outgoing calls based on user preferences and perform PBX functions from the remote device.

A first example embodiment is discussed and illustrated with reference to its implementation within an office building, multiple office buildings or other enterprise establishment In an office building, for example, personnel are assigned to offices (or cubicles) with each office having an associated telephone. The office telephones are typically connected to a PBX, exchange, or other call processing infrastructure. The PBX allows each office telephone to have its own telephone extension and a direct inward dial (DID) telephone number. As known in the art, a telephone extension is typically a three, four or five digit telephone number where station-to-station (i.e., office-to-office) calls can be placed by dialing the three, four or five digit extension. This is commonly referred to as direct extension dialing. As also known in the art, a DID telephone number allows external calls (i.e., calls initiated outside of the office PBX) to be placed directly to the office telephone.

The embodiments disclosed are not to be limited to any particular environment. The embodiments may be implemented, for example, in a hotel, boarding house, dormitory, apartment, or other commercial or residential establishment, where individuals are assigned to a unique extension or DID telephone number. The term "office" as used herein encompasses a singular room or space within a business, other enterprise, hotel room or similar facility. The term "user" as used herein encompasses office personnel, hotel guests or other individuals associated with a telephone extension and DID telephone number.

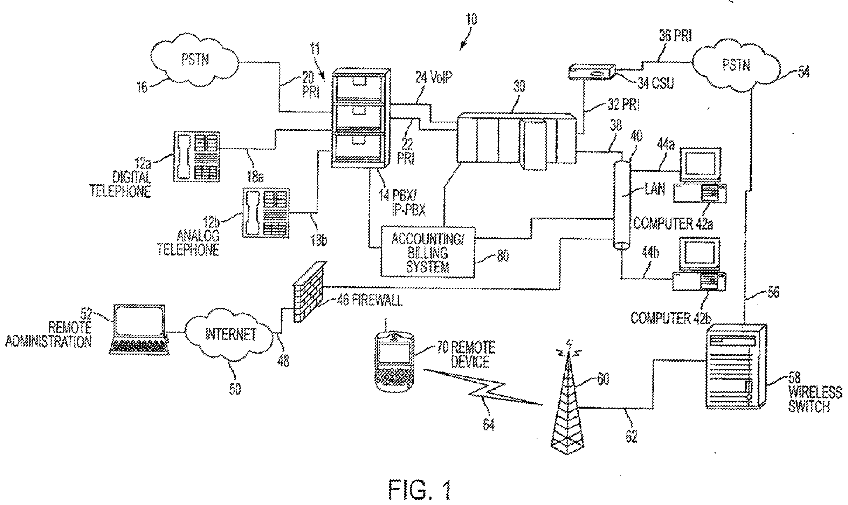

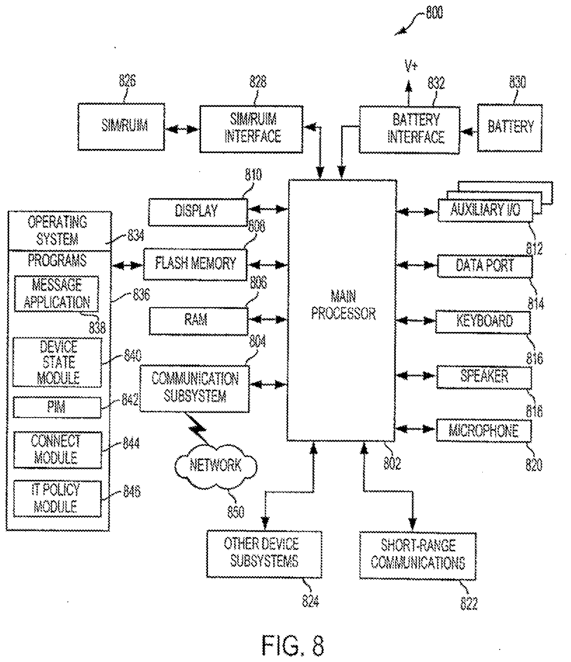

FIG. 1 illustrates a telecommunication system 10 constructed in accordance with an embodiment disclosed herein. As will be discussed below, the system 10 provides for a full integration of remote telephony devices, such as a remote device 70 (shown in this example as a personal digital assistant (PDA) with wireless voice and data communications (also referred to herein as a mobile device)), into an office, enterprise or hotel PBX or other communications network. The remote device 70 may be any suitable wirelessly enabled handheld remote device. The remote device 70 may be a dual mode (simultaneous data and voice communication capabilities) or single mode communication device, personal digital assistant, etc. such as the device 800 described in further detail below in relation to FIG. 8. Such devices include Blackberry™ devices by Research In Motion Limited of Ontario, Canada, or Palm® Treo™ devices by Palm, Inc. of California, U.S.A. to name a few. In addition, the remote device 70 may be a cellular telephone, etc.

The system 10 can selectively establish communications with one of a plurality of devices, including one or more remote devices 70, associated with a particular telephone extension or DID telephone number. Moreover, the system 10 will allow remote devices 70 such as a mobile device (described below in more detail) to perform functions of a standard office telephone 12a, 12b for both inbound and outbound communications. That is, a remote device 70 will be able to use features of the office network (e.g., direct extension dialing, corporate dialing plan, enterprise voicemail etc.) even though the device is not within the confines of the office or not directly connected to the office PBX. The system 10 also allows the remote device 70 to operate as an independent PDA, wireless telephone, etc. if so desired. That is, the remote device 70 may receive calls placed to its (non-office) DID telephone number even though the system 10 also routes PBX calls to the device 70. In addition, the system 10 essentially implements all or part of call management functions typically available on office, enterprise or hotel PBX or other communications network desktop telephone. Some of these features are discussed in detail below.

The system 10 as particularly illustrated herein includes a conventional office PBX network 11. The PBX network 11 may include a plurality of standard telephones 12a, 12b respectively connected to a conventional PBX/IP-PBX 14 via communication lines 18a, 18b. Although PBX network 11 may use a PBX or IP-PBX 14, the following disclosure will simply refer to PBX 14 for convenience purposes, The PBX 14 is connected to a calling network such as a public switched telephone network (PSTN) 16 by a primary rate interface (PRI) connection 20 or other suitable communication line or medium. The standard telephones 12a, 12b can be any digital or analog telephone or other communication device known in the art. As illustrated in FIG. 1, the first telephone 12a is a digital telephone while the second telephone 12b is an analog telephone. For clarity purposes only, two telephones 12a, 12b are illustrated in FIG. 1, but it should be appreciated that any number or combination of telephones or other communication devices can be supported by the system 10. Moreover, although it is desirable to use digital telephones, the invention is not to be limited to the particular type of telephone used in the system 10.

The PBX 14 is coupled to a server 30 constructed in accordance with an embodiment discussed in more detail below. The server 30 is connected to the PBX 14 in this embodiment by a PRI connection 22, VoIP connection 24 (if PBX 14 is an IP-PBX), or other suitable communication medium (e.g., WiFi connection). The server 30 is also connected to a PSTN 54 by a PRI connection or other suitable digital communication medium. The illustrated PRI connection between the server 30 and the PSTN 54 includes a first PRI connection 32, a channel service unit (CSU) 34, and a second PRI connection 36. As known in the art, a CSU is a mechanism for connecting a computer (or other device) to a digital medium that allows a customer to utilize their own equipment to retime and regenerate incoming signals. It should be appreciated that the illustrated connection between the server 30 and the PSTN 54 is one of many suitable connections. Accordingly, the embodiments disclosed should not be limited to the illustrated connection. The server 30 is one of the mechanisms that allows the integration of remote devices (e.g., mobile device 70) into the PBX network 11 and its operation will be described below in more detail. Moreover the server 30 maintains control over inbound, outgoing and in-progress calls and communications.

The server 30 is preferably connected to a local area network (LAN) 40 by an appropriate communication medium 38. Although a LAN 40 is illustrated, it should be appreciated that any other network, be it wired or wireless or a combination thereof, could be used. A plurality of computers (e.g., 42a, 42b) may be respectively connected to the LAN 40 by any appropriate communication lines 44a, 44b. The computers 42a, 42b can be used by network administrators or others to maintain server 30 and other portions of the system 10. The LAN 40 may also be connected to the Internet 50 by a suitable communication medium 48. A firewall 46 may be used for security purposes. In accordance with an embodiment, Internet 50 can be used to allow a remote administration device 52 (e.g., a personal computer) to perform remote administration of server 30 by office personnel or other authorized users of the system 10. Remote administration will allow office personnel to set user preferences for particular telephone extensions. Thus, each office telephone extension and associated remote device is individually configurable.

PSTN 54 is connected in this embodiment to a commercial wireless carrier (or other carrier not co-located with the system 10) by a wireless switch 58 or other wireless carrier equipment by an appropriate communication medium 56. The wireless switch 58 is connected to at least one antenna 60 (by an appropriate communication medium 62) for transmitting signals 64 to a wireless remote device 70. The wireless remote device 70 could also be a pager, wireless telephone, cellular telephone, or other wireless communication device. It may be desirable for the remote device 70 to be capable of handling both (or either) digital and analog communication signals. It should be noted that any type of wireless communication protocol (or a combination of different protocols), such as TDMA, CDMA, GSM, AMPS, MSR, iDEN, WAP, WiFi, etc., could be used.

It should be appreciated that the server 30 is connected to a wireless carrier through a PSTN 54 and not by unique hardware or an in-office cellular network. As a result, server 30 only has to interface with conventional components, such as the PBX 14 and PSTN 54. Thus, the system 10 is substantially technology independent. Moreover, special wireless devices are not required, which allows the remote device 70 to function in its conventional manner (e.g., as a separate mobile device) and as part of the PBX network 11 (if so desired). The PSTN 54 e.g., will send calls placed to the DID phone numbers associated with the PBX extensions to the server 30 where the server 30 resolves the called number and performs the call processing described below.

The server 30 and the PBX 14 may also be connected to an accounting/billing system 80. The billing system 80 may also be connected to the LAN 40 so that system administrators may access the contents of the billing system 80. By incorporating a billing system 80 into the system 10, it is possible to obtain immediate billing information for calls placed to/from the remote device 70 or other remote device. This immediate billing feature is not present in other PBX or enterprise networks and is particularly useful for corporate environments such as law firms and government agencies, and hotel environments, where up to date billing information is essential.

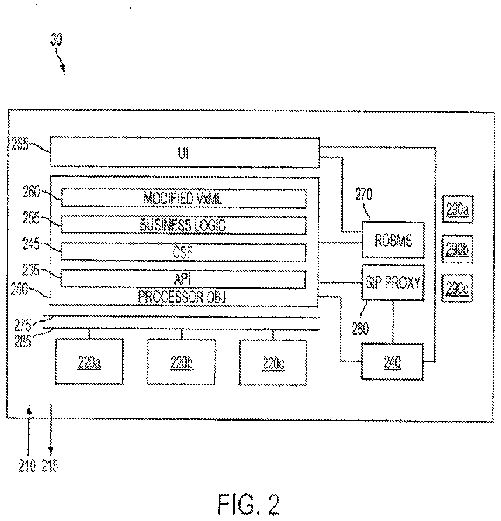

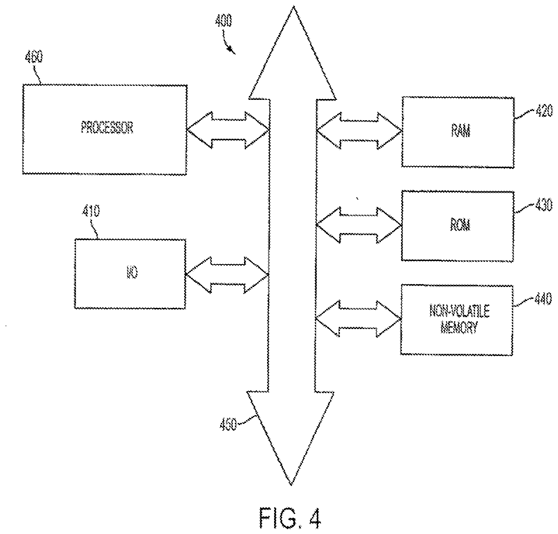

As noted above, the server 30 allows for the full integration of remote devices into the PBX network 11. In accordance with an embodiment, server 30 is a processor-based stand-alone unit capable of handling communications directed to the PBX network 11. In a first embodiment, shown in FIG. 2, server 30 comprises a plurality of receiving and transmitting modules 220a, 220b, 220c, first and second buses 275, 285, at least one processor module (Obj) 250, a network interface card 240 and a memory module operable to comprise a database 270 such as for example, a relational database management system (RDBMS). Further, server 30 can include a web-based user interface (UI) processor module 265, a SIP proxy server module 280 and a plurality of flop files 290a, 290b, 290c. The processor, UI and SIP proxy server modules 250, 265, 280 can be implemented, separately or together, as one or more processor cards (example hardware components of these cards are described below in more detail with reference to FIG. 4) containing source code, object modules, scripts, or other programming to perform the following functions.

The SIP proxy server module 280 receives session initiation protocol (SIP) messages from user agents and acts on their behalf in forwarding or responding to those messages. In essence, the SIP proxy server module 280 is a gateway for IP-based interfaces to the server 30. The SIP proxy server module 280 also adds services, features and scalability to SIP networks. The SIP proxy server module 280 typically includes a registration service and a SIP location database, in addition to the SIP proxy. Server 30 can receive an incoming call 210 and/or place an outgoing call 215 (described below in more detail). The processor module 250, among other things, directs and instructs the call processing of the server 30. The memory module comprising database 270 is used for storing user preferences and other pertinent information and may be a separate card or included within one of the other modules. The memory module may also be located external to the server 30, if desired, and connected to the server 30 by any wired or wireless communication medium.

FIG. 4 illustrates an example processor card 400, which may be used for the processor, UI and SIP proxy server modules 250, 265, 280. The card 400 includes a processor 460 for executing the processes of processor module 250 (or the other modules) that communicates with various other devices of the card 400 over a bus 450. These devices may include random access memory (RAM) 420, read-only memory (ROM) 430 and non volatile memory 440. An input/output device (I/O) 410 provides communication into and out of the card 400. While one input/output device 410 is shown, there may be multiple I/O devices included on the card as desired. Source code, or other programming, comprising applications required by or performed by the components of the server 30 may be stored on one of the computer readable storage media on the card 400 (e.g., ROM 430, non-volatile memory 440) and executed by the processor 460.

Referring now to FIGS. 2 and 4, the processor module 250 executes one or more computer programs or applications (Obj) stored in one or more memory units within (e.g., as shown in FIG. 4) or coupled to the processor module 250. Processor module 250 can include one or more processes such as a modified VxML 260 call flow process, business logic process 255, call service function (CSF) process 245, and a global application processing interface (API) process 235. It should be appreciated that processor module 250 can include one, all, or any combination of the processes described. The processor module 250 may also contain one or more additional databases and/or other processing memory used during the overall operation of system 10.

In one embodiment, the business logic process 255 can be used for determining whether or not a calling party (incoming or outgoing) is a participant of the server 30 network and allows the server 30 to be flexibly configured by providing routing plans and route translations, Interactive Voice Response (IVR) prompting and announcements, data manipulation, management and control. In another embodiment, the business logic 255 provides an intelligent call routing function (described below in more detail). The UI module 265 includes processes that provide an easy, but powerful, user interface to administer, configure and manage applications including the management of system, user, conference, notification, IVR and voicemail applications, to name a few.

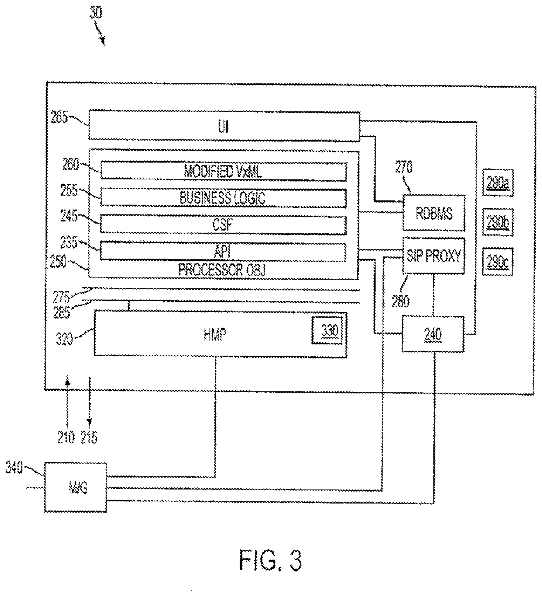

The plurality of receiving and transmitting modules 220a, 220b, 220c communicate with and handle incoming and outgoing telephone calls and are connected along bus 285. In one embodiment, bus 285 is an H100 or similar bus. The receiving and transmitting modules 220a, 220b, 220c may be telephonic cards such as e.g., Intel Disdogic cards, that communicate with processor module 250, database 270 and other components via bus 275 (for example, a PCI bus), which is bridged to bus 285 (bridge not shown), and are employed to receive and transmit information to the PBX 14 and PSTN 54 during call processing. The modules 220a, 220b, 220c also receive and transmit other information such as administrative information. In another embodiment as shown in FIG. 3, the receiving and transmitting modules 220a, 220b, 220c can also be implemented as a processor module 320 such as e.g., a Host Media Processing (HMP) processor having a memory 330 comprising a program that, when executed, causes the processor 320 to perform the desired telephony functions.

In one embodiment, the workload performed by the receiving and transmitting modules 220a, 220b, 220c, as well as some of the processing functions of processor module 250, are implemented using one or more conventional processor-based programmable telephony interface circuit cards (e.g., Intel Dialogic cards) used to interface server 30 with PBX 14 and the PSTN. The cards are programmed to perform the conventional telephony services required to place and receive calls) as well as being programmed to perform the unique call processing functions described below.

The server 30 preferably contains a database of office extension numbers (also referred to herein as PBX extensions) and DID telephone numbers associated with each existing PBX extension, the DID numbers being associated with one or more devices including one or more remote devices 70. The database will be stored on a computer readable storage medium, which may be part of (e.g., database 270) or connected to the server 30. The database may also contain a server-to-PBX extension (hereinafter referred to as a "SERVER-FBX extension") and one or more remote device telephone numbers associated with each PBX extension. In the illustrated embodiment, software running on the telephony modules 220a, 220b, 220c interfaces with the database to perform the various call processing functions discussed below.

In the embodiment illustrated in FIG. 1, the PBX 14 contains a coordinated dialing plan (CDP) steering table. The CDP steering table will be stored and retrieved from a computer readable storage medium, which may be part of or connected to the PBX 14. The CDP steering table directs the routing of some or all PBX extensions to the server 30 over the PRI 22 and VoIP 24 connections between the server 30 and the PBX 14. In addition, the CDP steering table of the PBX 14 directs the routing of all SERVER-PBX extensions received from the server 30 to the appropriate office telephone.

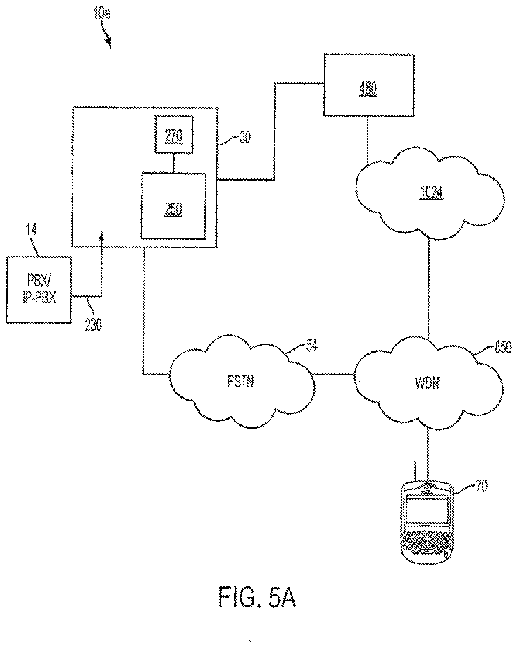

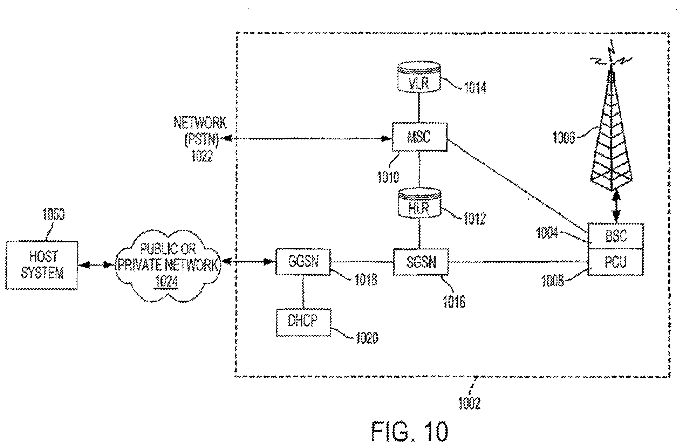

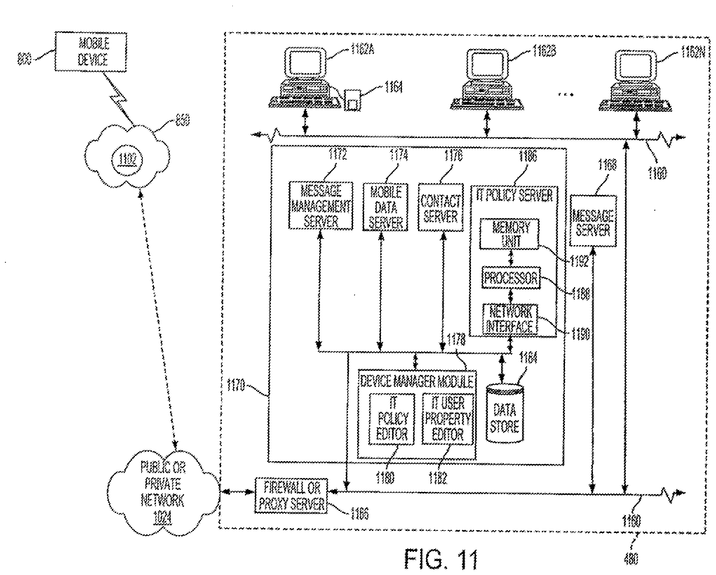

FIG. 5A illustrates another example of a telecommunication system 10a constructed in accordance with another embodiment System 10a comprises PBX 14, which is connected to server 30, including processor module 250 and database 270, via a PRI connection 230. As stated above, PBX 14 could also be an IP-PBX and thus, there can also be a VoIP connection between the server and PBX 14. There can also be a wireless connection (e.g., WiFi) if desired. Server 30 also includes components from FIG. 2 or 3 as desired, but the components are not illustrated for convenience purposes. The server 30 is connected to remote device 70 via a host system 480, network 1024 and wireless network (WDN) 850 (all of which are described in more detail below with respect to FIGS. 10 and 11). It should be appreciated that the communications between the server 30, host system 480 and remote device 70 may be encrypted to render the information in the communications (i.e., telephone numbers, user login identifications, system information and settings, etc.) indecipherable to the public. Although the use of encryption is desirable, the decision of whether encryption is to be used may be left up to the end user or system administrator of the remote device 70, host system 480 and/or server 30. The host system 480 can include a web services connection (i.e., for the Internet) to provide an interface between the server 30 and remote device 70. The host system 480 can also include a mobile data server (e.g., server 1174 of FIG. 11) for facilitating data communications between the server 30 and remote device 70. A PSTN 54 is also in communication with the server 30 and remote device 70.

The processor module 250 of the server 30 executes one or more programs stored in its associated memory to process calls received through the PBX 14 or PSTN 54. The remote device 70 will also contain a "client" application designed to communicate with the server 30 and perfonn the following processing in accordance with embodiments described herein. A suitable application architecture for the remote device 70 is disclosed in U.S. provisional application no. 60/852,639. A summary of the application architecture is now provided.

The remote device 70 may include a generic presentation layer, device specific presentation layer, application logic, generic device control and device specific device control. The generic presentation layer controls keypad and display functions. The device specific presentation layer controls features specific to the device 70. For example, depending on the remote device 70, the features could include interfacing with a track wheel, thumbwheel, track ball, or touch screen to name a few. The device 70 will have a screen with reasonable resolution and basic graphical capabilities. The device 70 will also have a basic user input system such as e.g., function keys, reduced or full-size keyboard, and/or a graphical input capability (e.g., touch screen). The device 70 will further include a data communications interface as described below with reference to FIGS. 8-11.

The client application utilizes standard API's and built-in capabilities of the e.g., Java ME (J2ME) environment for the management of data presentation and device control. These standard capabilities allow for a level of generic data presentation, data input control and data messaging such as e.g., TCP/IP, UDP/IP, SMS, to name a few. The application logic manages the inputs and outputs to and from the device 70 and processes this information to provide the generic device client capabilities such as e.g., administration, inbound call management, outbound call management and mid-call (or call in progress) management.

Similar to system 10, system 10a essentially implements all or part of call management functions typically available on office, enterprise or hotel PBX or other communications network desktop telephone. Some of these features are discussed in detail below. Moreover, the server 30 maintains control over inbound, outgoing and in-progress calls and communications. Example call processing flows are also disclosed in U.S. provisional application no. 60/852,639. some of which are now summarized.

Initially a remote device 70 must log into server 30 by sending a session request login data signal/message to the server 30. This request may be performed automatically (e.g., every time the device 70 is powered-up, or periodically), it may happen manually when the user selects a predetermined device application, or it may happen automatically or manually in response to a request from the server 30. The data signal from the remote device 70 is sent through system 480 by any of the various supported methods described below (e.g., web services). In response, the server 30 will either send a data signal accepting the login request or rejecting the login request. If the device 70 is accepted, the user gains access to server 30 and the ability to process calls in any of the methods described below. The remote device 70 and server 30 can periodically or continuously request information from each other using data signals/messages. When remote device 70 sends information via . a data signal/message, server 30 replies with an acknowledgement data signal. Similarly, when the server 30 sends information via a data signal to the remote device 70, it is acknowledged by the device 70 in an acknowledgement data signal. Information from the server 30 can include profile infonnation, system settings, messages, etc. Information from the remote device 70 can include profile information, Do Not Disturb information (DND), user preferences, device configuration settings, etc.

A user can accept an incoming call placed to the user's PBX extension or DID telephone number on the remote device 70 (even though the caller did not dial the remote device's 70 telephone number). This is because inbound DID calls are received directly by the server 30 from e.g., the PSTN 54. Server 30 receives an incoming voice call for the user, holds onto that call, and sends a call setup request data signal to the remote device 70 inquiring whether or not the user would like to accept the call. The server 30 may also simultaneously ring the user's office telephone or other telephone associated with the user's PBX extension. Alternatively, the server 30 may sequentially ring the user's other telephones after a predetermined period of time elapses. The decision of whether to simultaneously or sequentially ring the user's telephony devices is based on the user's preferences stored at the server 30.

The call setup request data signal will cause an audible, visual and/or vibrational indication to occur on the remote device 70 (as set by a user or system preference). The user may answer the call by having the device 70 send an answer data signal to the server 30. In response, the server 30 will setup a voice call to the remote device 70 and substantially seamlessly connect the held calling party's incoming call to the remote device 70. The user may also deflect the inbound call to voicemail by having the device 70 send a call setup response deflect data signal to the server 30. In this scenario, the server 30 will setup a voice call to e.g., the voicemail box associated with the user's PBX extension or other voicemail box setup by the user (voice signal flow line 106d) and then connects the held calling party's incoming call to the voicemail box.

The user is also capable of placing outgoing from the remote device 70 through the server 30 (and thus, the PBX) in the following exemplary manner. If a user wants to place a call to party 1, the user has the remote device 70 send an out dial request data signal to server 30 requesting to place an outbound call through the server 30. Any input mechanism (e.g., keyboard, track wheel, stylus, etc.) may be used to send the out dial request from the remote device 70. Server 30 determines from the request whether the user and/or remote device 70 has sufficient rights to place the outbound call. Server 30 will respond by sending an out dial response accept data signal accepting the user's request, or by sending an out dial response reject data signal rejecting the outbound call to remote device 70 depending on the user's rights. If server 30 accepts the outbound call request, the server 30 will place an outbound voice call to the remote device 70 and another voice call to the called party (e.g., party 1). The server 30 then substantially seamlessly connects the two calls allowing voice communications between the called party and user of the remote device 70.

The system 10, 10a also provides additional call processing while a call/connection is already in progress. That is, once a voice call between a user of a remote device 70 and another party ("party A") is in progress, the server 30 allows e.g., the user to conference in another party ("party B"), place party A on hold while accepting a call from or placing a call to party B, deflect a call from party B while continuing with the party A call, to name a few. All of these scenarios are possible because the server 30 maintains control over the ongoing call. Therefore, if during a call, party B attempts to call the user, server 30 will receive the call communication from party B and send a call setup request data signal to the remote device 70 alerting the device 70 to the new call. At this point, the user can send (via the remote device 70) a data signal accepting, deflecting or conferencing in the party B call. Based on the response, the server 30 makes the necessary call connections. Likewise, if during the call with party A, the user decides to call party B, the user can send (via the remote device 70) a data signal requesting the server 30 to call party B. The server 30 initiates the call to party B, and based on the user's request, can place party A on hold, send party A to voicemail, or join the calls to form a conference call. It should be appreciated that DTMF tones can also be used instead of data signals, if desired.

It should be appreciated that the interaction between remote device 70 and server 30 can include any call processing telephony functions such as simultaneous ring across multiple devices, single voicemail box, universal voice mail notification, answer acknowledgement, making and receiving a call, abbreviating extension dialing, call hold and retrieval, multiple can appearance, direct inward/outward dialing, post digit dialing, flexible dialing plans/intemational dialing, caller ID (name, number), voicemail notification, auto reconnect, callback, call forwarding, call transfer, call hold, call waiting, call mute, call blocking, call redial, call parking, speed dial, operator assisted dialing. Do Not Disturb (DND), DND Bypass List (i.e., a list of names/numbers allowed to bypass the do not disturb feature), and DND Ignore List (i.e., a list of names/numbers to always divert to voicemail).

In accordance with an embodiment, the database of server 30 may also contain numerous system-defined user access rights and user modifiable preferences, which can alter the call processing of the invention. Referring back to FIG. 1, an office administrator may use the network computers 42a, 42b or a remote administration device 52 to set user access rights and priorities. The user may use the remote administration device 52 to set numerous user preferences. It is also desirable that a Web-based or graphical user interface be used so that the user can easily access and set user preferences. The network computers 42a, 42b (or remote device 52) may also be used by the user if so desired.

One of the modifiable user preferences is the association of the user's office/PBX extension to one or more telephony devices. The user can associate its office/PBX extension to more than one remote device 70. The remote devices can include cellular telephones, Blackberry™ devices, Palm® Treo™ devices, other personal digital assistants, satellite telephones, landline or wireless telephones. Moreover, the remote device 70 can include at least one device associated with a home telephone number, or other telephone number where the user can be reached. To associate the user's extension to these remote devices, the user can access a "User Phones" preference page/menu from any device capable of communicating with the server 30 in the manner described above and can simply list the telephone number of the remote device 70 as one of the user's remote devices.

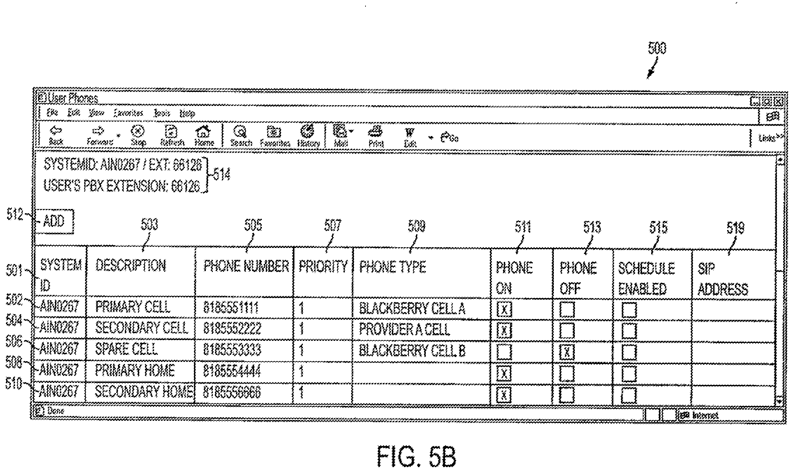

FIG. 5B illustrates an example of the User Phones preference page 500, which can be used by the user to associate remote telephony devices to the user's extension. As illustrated, the page 500 contains multiple rows 502, 504, 506, 508, 510 of remote devices and their telephone numbers all of which have been associated with the extension "66126" listed in static area 514 of the page 500. Static area 514 also contains a system identifier ("System ID"), a system extension ("Ext.") and a separate field for the user's PBX extension. As discussed above, the system 10, 10a could be connected to a PBX (e.g., PBX 14) that has existing PBX extensions, and it may be desirable for the system 10, 10a to have a predefined range of extensions for all of its users for convenience purposes. Accordingly, the system extension ("Ext.") could be different than the PBX extension. It should be appreciated that there are similar pages 500 for other extensions used by the enterprise network and recognized by the server 30. The illustrated page 500 lists the following fields for each row 502, 504, 506, 508, 510 of remote devices/telephone numbers: System ID 501, Description 503, Phone Number 505, Priority 507, Phone Type 509, Phone On 511, Phone Off 513, Schedule Enabled 515, and SIP Address 519.

The System ID field 501 is used to associate the system's identifier to the user's remote devices. It should be appreciated that a different system identifier could populate the rows 502, 504, 506, 508, 510 and the embodiment is not necessarily limited to the contents of the example page 500. The Description field 503 allows the user to identify or name the device being listed in the row. A descriptive name, for example, can make it easier for the user or system administrator to identify the particular remote device listed in the row. For example, the first row 502 contains a device described as "Primary Cell", which presumably means that the user equates this device to its primary cellular telephone and its telephone number. According to the Phone Type field 509, this user's "Primary Cell" is a Blackberry™ device (i.e., Blackberry Cell A). The Phone Number field 505 associates the Primary Cell's telephone number (i.e., 8185551111) to the user's extension (i.e., "66126").

Once the remote device is turned on using the Phone On field 511, calls can be sent to the remote device 70 via the server 30 as described above and below. The Phone Off field 513 allows the user to prevent calls from being sent to the particular remote device from the server 30. In the illustrated example, the devices listed in rows 502, 504, 508 and 510 are turned on while the device listed in row 506 is turned off (via field 513). Regardless of the settings in fields 511 and 513, the remote devices listed in the rows 502, 504, 506, 508, 510 are still capable of receiving and placing calls using the carrier network or service provider associated with that device.

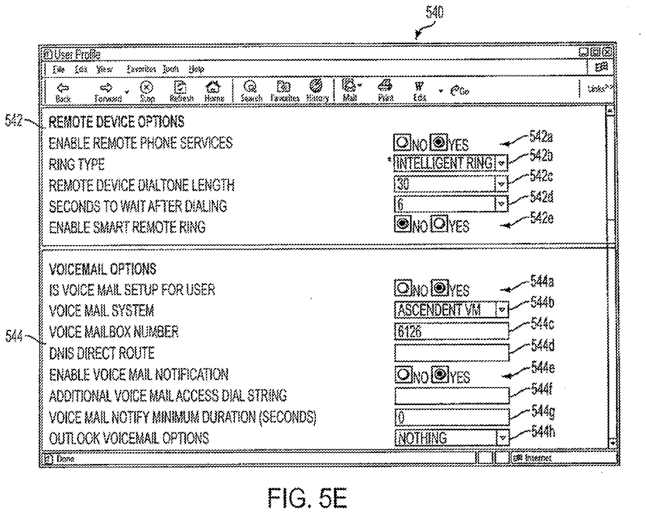

The illustrated page 500 also includes a Priority field 507, which can be used by the server 30 to determine a priority order among the remote devices listed in the rows 502, 504, 506, 508, 510. In one embodiment, prioritizing the remote devices using field 507 will dictate the order in which the server 30 rings the remote devices for certain modes of operation. For example, the system 10, 10a allows the user to set a preference for a sequential ringing of his remote devices (using field 542b illustrated in FIG. 5E and discussed below in more detail) when there is an inbound call to the user's PBX extension. In the sequential ring mode, for example, once an inbound call is received, the server 30 will first ring the remote device having the highest priority, then ring the remote device having the second highest priority, and so on according to the priority level listed in field 507. In the illustrated example, all of the devices listed in the tows 502, 504, 506, 508, 510 have the same priority (i.e., priority level 1), which means for the sequential ring mode, the server 30 will start ringing the active devices in the order listed on page 500.

Another option available using page 500 includes enabling schedules for the user's remote devices via the Schedule Enabled field 515. The enabling of schedules (via field 515) allows the user to set up which remote devices are active and when during certain days of the week. That is, a schedule page (not shown) allows the user to activate certain devices for a particular day and time. The schedule would list each day the user wants to schedule and for each day, an enable time, a disable time and a list of the user's devices that are active between the enable and disable times for that day. In addition, the page 500 includes a SIP address for any of the user's SIP devices that can be used with the server 30. In the illustrated example, new devices and telephone numbers can be added by pushing the ADD button 512.

Thus, according to FIG. 5B, the user associated with extension "66126" has four remote devices that are active for receiving calls from the server 30 (or placing calls through the server 30): a Primary Cell device that is a Blackberry™ device having the telephone number 8185551111 (row 502); a Secondary Cell device that is a cellular device from provider A having the telephone number 8185552222 (row 504); a Primary Home device having the telephone number 8185554444 (row 508); and a Secondary Home device having the telephone number 8185556666 (row 510). A Spare Cell device that is a Blackberry™ device having the telephone number 8185553333 (row 506) is not active at this time for use with the routing provided by the server 30.

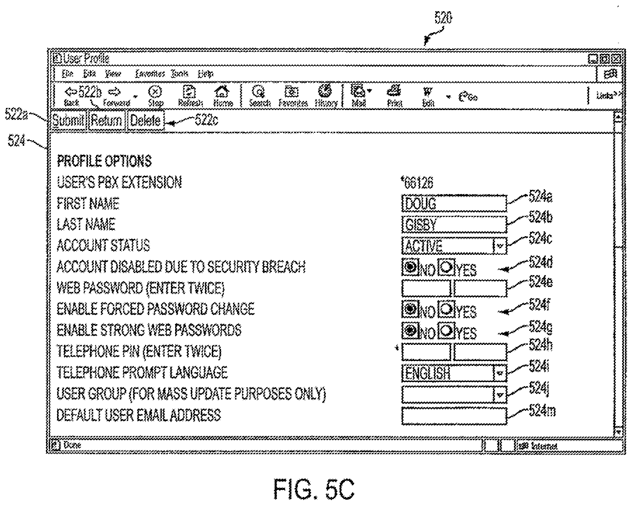

As noted above, there are other user preferences that the user can set. In a desired embodiment, the following user preferences may be set through a set of "User Profile" pages/screens as illustrated in FIGS. 5C-5F. It should be appreciated that although the User Profile is illustrated over a series of pages/screen shots 520, 530, 540, 550, in actual use, the User Profile can consist of one large page with scroll bars or other on-screen options. Thus, the embodiments described herein are not limited to the illustrated examples.

Referring to FIG. 5C, the first screen 520 of the User Profile contains a Profile Options section 524 and user selection software buttons 522. In the illustrated embodiment, the buttons 522 include a button 522a for submitting changes, a button 522b for returning from the current screen to a prior screen and a button 522c for deleting the User Profile. The Profile Options section 524 has a static field listing the user's extension (i.e., "66126") and numerous dynamic fields, some of which input typed text, others which are drop down menus or selection buttons.

The first two fields 524a, 524b allow the user to enter its first and last name. An Account Status field 524c allows the user and/or administrator to activate or deactivate the user's ability to use the server 30. In the illustrated example, the user's account is active. The illustrated Profile Options section 524 also includes a field 524d allowing an administrator or other personnel to disable the user's account based on a security breach. The security breach can be the detection of an invalid password used to access the User Profile or other misuse of the system. The illustrated Profile Options section 524 also includes a field 524e for setting a user web password, a field 524f for enabling forced password changes (e.g., every 3 months the user would be required to change its password), a field 524g for enabling strong passwords (e.g., requiring certain length and/or characters in the password). The set password can be used e.g., by the user, to access the pages of its User Profile.

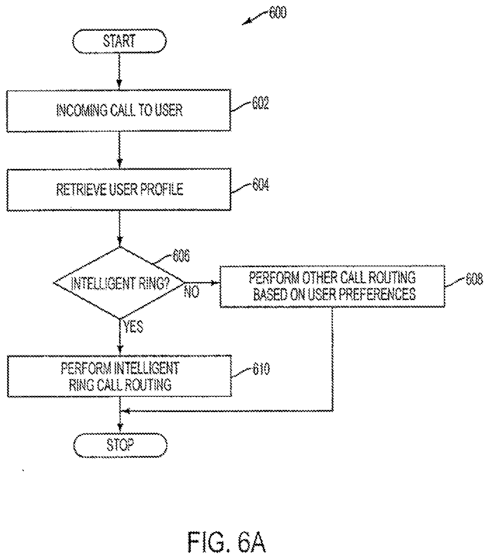

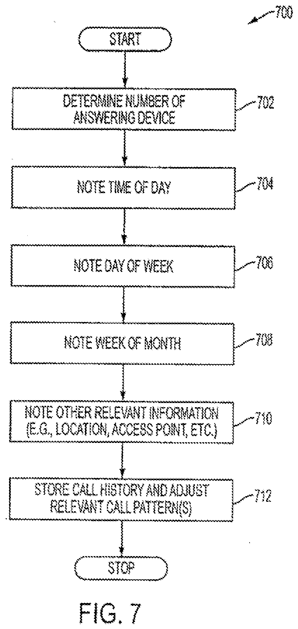

As shown in FIG. 5C, the Profile Options section 524 can also include fields 524h for setting a telephone personal identification number (PIN) and a drop down menu field 524i for setting a telephone prompt language (e.g., English) for voice prompts or interactive voice response menus. The PIN (field 524h) is used as a password by the user to access the Interactive Voice Response (IVR) features of the server 30. As shown in FIG. 5C, it is desirable that the user's web password and PIN are entered twice in fields 524e, 524h, respectively, to ensure that the user has set a valid password and PIN. The Profile Options section 524 also includes a field 524j for associating the user with a User Group. In the illustrated embodiment, the User Group is used to conduct mass updates to system users' accounts on a per group basis. A Default User Email Address field 524m is also include in the illustrated embodiment of the Profile Options section 524. Again, although these fields are desirable and serve particularly useful functions system-wide, they are not required to perform the processing described below with respect to FIGS. 6A-6C and 7.

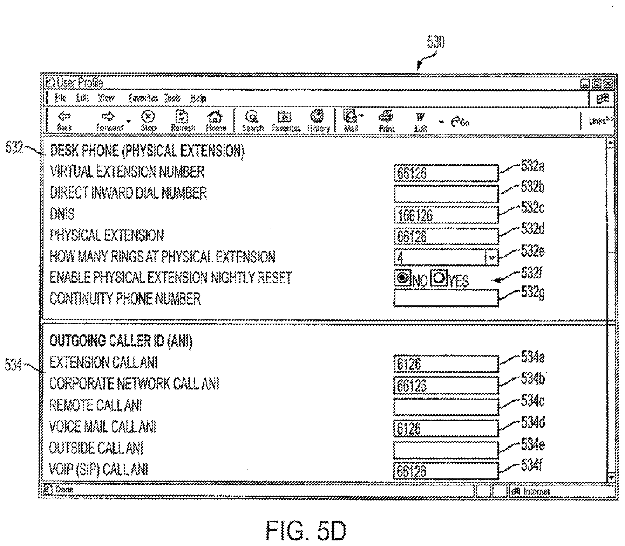

Referring to FIG. 5D, the second screen 530 of the User Profile contains a Desk Phone (Physical Extension) section 532 and an Outgoing Caller ID (ANI) section 534. As is known in the art, incoming telephone calls have automatic number identification (ANI) and dialed number identification service (DNIS) information. The ANI identifies the telephone number of the calling party and is traditionally used for "caller ID." As is also known in the art, the DNIS identifies the telephone number of the called party. The Desk Phone (Physical Extension) section 532 and an Outgoing Caller ID (ANI) section 534, among other things, are used to modify the ANI and DNIS information associated with the user's physical extension.

The Desk Phone (Physical Extension) section 532 includes the following modifiable fields: a Virtual Extension Number field 532a, Direct Inward Dial Number field 532b, DNIS field 532c, Physical Extension field 532d, Rings at Physical Extension field 532e, an Enable Physical Extension Nightly Reset field 532f and a Continuity Phone Number field 532g. With these fields, the user, administrator and/or other authorized personnel can set up and associate with a desk telephone/physical extension (e.g., "66126"), a virtual extension, direct inward dial number, and DNIS information placed within a call (e.g., "166126"). As noted above, the system administrator or other authorized personnel may desire having all system extensions to fall within a predetermined range. This means that it may be desirable to present one extension to the server 30 and a different one to the user or callers to the user. A virtual extension (field 532a) allows the system 10, 10a to associate a different extension number to the PBX extension number, when desired. The direct inward dial number (field 532b) allows the user or administrator to associate a 10-digit telephone number with the physical extension so that calls placed from outside the system 10, 10a may be placed to the user's desk phone and associated remote devices using the 10-digit telephone number. In the illustrated example, the user has set the DNIS to "166126" which is representative of how an example enterprise PBX represents the DNIS information. It should be appreciated, however, that the user could place any number in the DNIS field 532c, if desired.

The user can also indicate how many rings will occur at the desk telephone/physical extension (using field 532e). The user can also use field 532f to set up a nightly reset of the physical extension and field 532g to set up a continuity telephone number, if desired. A continuity number is a failover number that may be used if the server 30 or other component of the system 10, 10a experiences a failure. In the event of a failure, calls will be routed to the continuity number. It should be noted that default values, typically set up by e.g., the administrator, may also be used.

The Outgoing Caller ID (ANI) section 534 includes the following modifiable fields: an Extension Call ANI field 534a, a Corporate Network Call ANI field 534b, a Remote Call ANI field 534c, a Voice Mail Call ANI field 534d, an Outside Call ANI field 534e, and a VoIP (SIP) Call ANI field 534f. User access to the system's 10, 10a voice mail should require authentication to prevent unauthorized access to the user's voice mail. In a desired embodiment, self-authentication can be achieved when the user accesses his voice mail using a device with an ANI that matches the Voice Mail Call ANI field 534d. The Extension Call ANI field 534a allows the user or other personnel to set the ANI for extension to extension calls, which in the illustrated example is "6126". This same ANI has been used for calls to voice mail (i.e., field 534d). The Corporate Network Call ANI field 534b allows the user or other personnel to set the ANI for calls within the corporate network, which in the illustrated example is "66126". This same ANI has been used for VoIP or SIP calls (i.e., field 534f). The Outside Call ANI field 534e (which in the illustrated example has been left blank) allows the user or other personnel to set the ANI for a call placed outside of the corporate network. This way, regardless of what telephony device was used (i.e., any of the devices listed on page 500), if the user places the outside call through the server 30, the called party will see the Outside Call ANI, which may make it easier to recognize the caller. In the illustrated example, the user has set the various ANI fields to substantially similar numbers (i.e., "66126" or "6126"), which are representative of how the enterprise PBX represents the ANI information for the particular type of call It should be appreciated, however, that the user could place any number in the ANI fields 534a, 534b, 534c, 534d, 534e, 534f, if desired.

Referring to FIG. 5E, the third screen 540 of the User Profile contains a Remote Device Options section 542 and a Voicemail Options section 544. The Remote Device Options section 542 includes an Enable Remote Phone Services field 542a, a Ring Type field 542b, a Remote Device Dialtone Length field 542c, Seconds to Wait after Dialing Field 542d and an Enable Smart Remote Ring field 542e. The Enable Remote Phone Services field 542a, when "yes" is selected, allows telephone calls to be routed to the remote devices identified in the User Phones page 500 (FIG. 5B) in accordance with the user modifiable Ring Type field 542b. This feature also enables the remote devices identified in the User Phones page 500 (FIG. 5B) to place calls through the server 30 (as described above). Otherwise, if the Enable Remote Phone Services field 542a is set to "no," calls are not forwarded to the remote devices identified in the User Phones page 500 (FIG. 5B). Likewise, the remote devices will not be able to place calls through the server 30 when "no" is selected.

The Ring Type field 542b is a pull down menu with at least four options. The first option is a simultaneous ring option in which the user's desk telephone and active remote devices simultaneously ring when an inbound call destined for the user's extension is received by the server 30. The second option is a sequential ring option in which the inbound call is first routed to the desk telephone extension, then the first remote device, etc. until the call is answered or forwarded to voicemail. The sequential and simultaneous ring options are described above.

A third Ring Type option is referred to herein as a hybrid ring option in which calls may be routed to some devices in sequence and others simultaneously. For example, an inbound call may be initially routed to the desk telephone and if the call is not answered within a predefined number of rings, the call is then routed to a plurality of remote devices simultaneously. As another example, the inbound call may be routed to the user's extension and a first remote device simultaneously, if the call is not answered within a predefined number of rings, the call is then routed to the remaining remote devices in a sequential manner or simultaneously.

FIG. 5E illustrates a fourth Ring Type option referred to herein as an "Intelligent Ring" option, which is described in more detail with respect to FIGS. 6A-6C and 7. Generally, the Intelligent Ring option allows inbound calls to be routed to the physical extension or particular remote devices based on a user's historical call patterns and, if desired, more recent call behavior such as call history within e.g., the past 15-30 minutes or so (referred to herein as "transient" behavior). That is, based on the user's prior call patterns, the server 30 is capable of determining which device (remote or otherwise) the user is most likely going to answer at this point in time. This feature will enhance call routing by reducing the number of calls placed, which saves money and frees up communication lines and trunks. In addition, the "Intelligent Ring" option can use location or proximity data from external sources (such as Bluetooth, RFID, GPS receivers, motion sensors and the like) as well as presence data (such as that which can be gathered from corporate or personal computer system activity) to further enhance the determination of which device or devices the user is most likely going to answer.

The Remote Device Dialtone Length field 542c sets the length of a dial tone provided to the remote devices identified in the User Phones page 500 (FIG. 5B). That is, the server 30 generates and transmits a dial tone to the remote device(s) 70 as if the user had picked up an office telephone 12a connected to the PBX 14. In a preferred embodiment, the spoofing of the dial tone is achieved by the server 30 internally generating the appropriate tone (e.g., through software or hardware modules). The dial tone is then played to a remote device (e.g., wireless or cellular telephone, Blackberry™, etc.) as a prompt while waiting to receive DTMF digits from the wireless user indicating the telephone number the user wishes to dial. The Remote Device Dialtone Length field 542c allows the user to control how long a dial tone is played before a dial tone time-out occurs.

The Seconds to Wait after Dialing Field 542d is an additional option available to the user to indicate how long the server 30 should wait after dialing out to determine e.g., if the call has been answered at that device. The Enable Smart Remote Ring field 542e is an option to enable a smart remote ring feature of the server 30 as set forth in the ring type field 542b. Thus, it may be possible to enable remote phone services (field 542a) to allow the user to access the server 30 from a remote device, but disable the various ways inbound calls are routed to the devices (field 542e). As with other available features and fields, although these fields are desirable and serve particularly useful functions system-wide, they are not required to perform the processing described below with respect to FIGS. 6A-6C and 7.

The Voicemail Options section 544 includes a field 544a having yes and no selection boxes for indicating whether a voice mailbox has been set up for the user. A pull down menu selection field 544b is included to select the voicemail system to use for this user. Although not intended to limit the embodiments described herein, supported voicemail systems include e.g., Nortel's Meridian™, CISCO's Unity™, and Avaya's Audix™ systems to name a few. In addition, as shown in FIG. 5E, an enterprise voicemail system run by the system 10, 10a (e.g., Ascendent VM) could also be used. A Voice Mailbox Number field 544c is included to indicate the user's mailbox number (e.g., "6126") on the voicemail system. The Voicemail Options section 544 also includes a field 544e having yes and no selection boxes for indicating whether a voicemail notification should be sent to the user. In the illustrated example, the field 544c has been set to "yes" indicating that a voicemail notification will be sent to the user when a message is left in the user's mailbox identified in fields 544b and 544c.

The Voicemail Options section 544 also includes optional fields for setting a DNIS direct route (field 544d), creating an additional voice mail access dialing string (field 544f), setting a voice mail notification minimum duration (field 544g) and for including an option for notifying the user's email account (e.g., Microsoft Outlook)(field 544h). The DNIS direct route (field 544d) allows the user to create an alternative DNIS different from the direct inward dialed number. The additional voice mail access dialing string (field 544f) allows the user to use one dialing string for depositing information or passing parameters into the user's voicemail and another dialing string for accessing voicemail messages. The voice mail notification minimum duration (field 544g) indicates how long the system will wait before notifying the user that there is a voicemail message. As with other available features and fields, although these fields are desirable and serve particularly useful functions system-wide, they are not required to perform the processing described below with respect to FIGS. 6A-6C and 7.

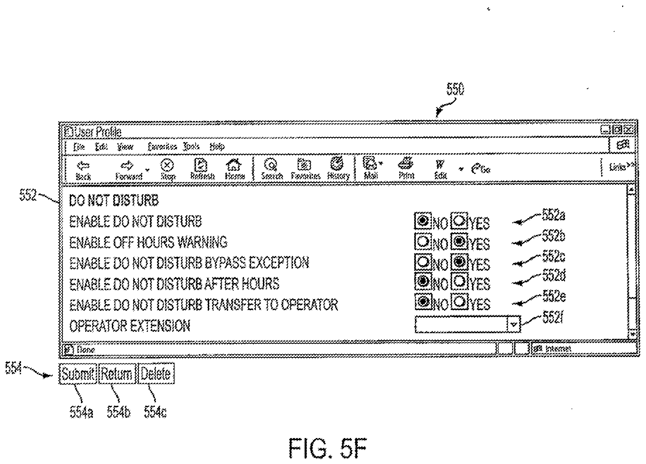

Referring to FIG. 5F, the fourth screen 550 of the User Profile contains a Do Not Disturb section 552 and user selection software buttons 554. In the illustrated embodiment, the buttons 554 include a button 554a for submitting changes, a button 554b for returning from the current screen to a prior screen and a button 554c for deleting the User Profile. These buttons 554 are similar to the buttons 522 illustrated in FIG. 5C. The Do Not Disturb section 552 includes a field 552a having yes and no selection boxes for enabling the Do Not Disturb feature. The Do Not Disturb feature is an option that, when enabled, forwards all calls to another extension (typically the user's voice mailbox) unless the user has set up a Do Not Disturb Bypass Exception (also referred to as Do Not Disturb Ignore) using field 552c. If the user has enabled the Do Not Disturb Bypass Exception (using field 552c) calls placed from a user defined list of telephone numbers are not forwarded to voicemail; instead, the calls are routed to the user in accordance with the user's routing preferences.

In the illustrated example, the Do Not Disturb section 552 also includes a field 552b having yes and no selection boxes for enabling an off hours warning and a field 552d for enabling the Do Not Disturb feature during off hours. These fields 552b and 552d allow a user to set up Do Not Disturb only for calls that are received after hours, if desired. Although not shown, there is a page, similar to a schedule described above, whereby a user can set days/times for activating the Do Not Disturb feature. The off hours warning (field 552b) provides a mechanism for alerting the user that the off hours Do Not Disturb feature has been activated. This way, if the user has forgotten that he has activated the off hours Do Not Disturb feature, he will be reminded that it is on (and provides the user with the opportunity to turn it off when expecting off hour calls). In the illustrated example, the Do Not Disturb section 552 also includes a field 552e having yes and no selection boxes for enabling a Do Not Disturb feature that transfers incoming calls to an operator or other person (defined by field 552f) rather than the user's voice mailbox.

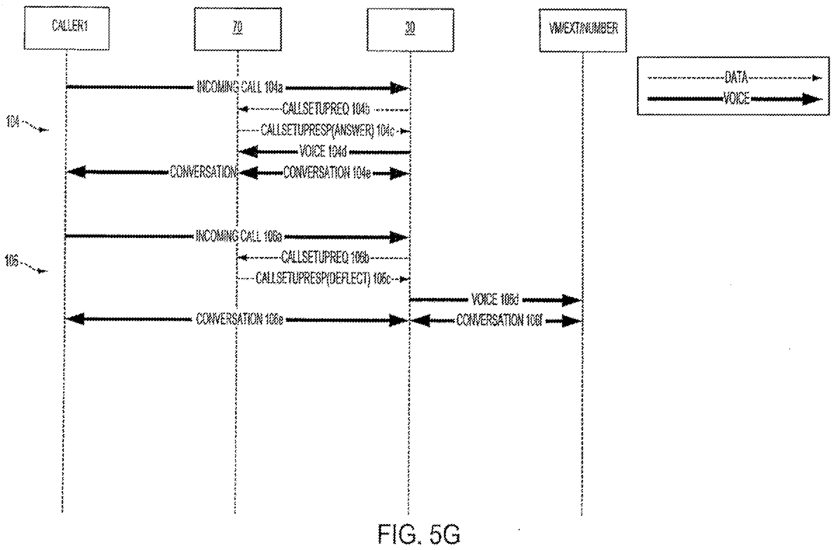

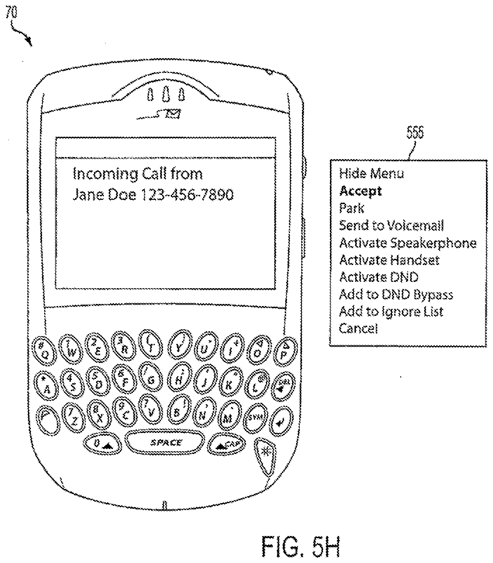

In accordance with an example embodiment, FIG. 5G illustrates the basic incoming call processing flow that the server 30 (via processor module 250), host system 480 and remote device 70 may be programmed to handle and execute. In scenario 104, as shown in FIG. 5G, a user can accept an incoming call placed to a PBX extension or DID telephone number by a caller (e.g., caller1). Server 30 receives an incoming voice call from the calling party (flow line 104a). Server 30 sends a call setup request data signal to the remote device 70 (flow line 104b) inquiring whether or not the user would like to accept the call. The call setup request data signal will cause an audible, visual and/or vibration indication to occur on the remote device 70 (as set by a user or system preference). For example, the call setup request data signal may cause the remote device 70 to play a ring, ring tone or other suitable audible indication. The call setup request data signal may cause the device 70 to display a textual or graphical message, pop-up or other visual notification (e.g., blinking LED on the device 70). FIG. 5H illustrates a textual message "Incoming Call from Jane Doe 123-456-7890" to alert the user of the caller. User responses may include, e.g., "answer" or "deflect". FIG. 5H illustrates options 555, which the user may select at this point. In scenario 104, the user chooses to answer the call by having the device 70 send a call setup response answer data signal to the server 30 (flow line 104c). This may be performed by selecting "accept" from the options 555 illustrated in FIG. 5H. In response, the server 30 will setup a voice call to the remote device (voice signal flow line 104d) and substantially seamlessly connect the held calling party's incoming call to the remote device 70 via PSTN connection 54 (shown as voice signal flow line 104e). The user's acceptance or denial can be a manual input operation or automatic operation based on programmed user interfaces.

In scenario 106, the user of the remote device 70 wishes to deflect the inbound call to voicemail. In this scenario, server 30 receives an incoming voice call from the calling party (flow line 106a). Server 30 sends a call setup request data signal to the remote device 70 (flow line 106b) inquiring whether or not the user would like to accept the call. One or more of the above mentioned visual, audible and/or vibration indications will be present at the remote device 70. The user chooses to deflect the call by having the device 70 send a call setup response deflect data signal to the server 30 (flow line 106c). This may be performed by selecting "send to voicemail" from the options 555 illustrated in FIG. 5H. In response, the server 30 will setup a voice call to e.g., the voicemail box associated with the user's PBX extension or other voicemail box setup by the user (voice signal flow line 106d). The server 30 connects the held calling party's incoming call to the voicemail box via PSTN connection 54 (shown as voice signal flow lines 106e and 106f). The calling party communicates via PSTN connection 54 with the user's voicemail via a connection path between the calling party and server 30 (flow line 106e), and another connection path between server 30 and the voicemail (flow line 106f).

It should be appreciated that the server 30 and its system 10, 10a provide one contact number for each user, which has several advantages. The single contact number could be e.g., the user's physical office extension or DID telephone number. The single contact number could a virtual number assigned by the system administrator or other office/enterprise personnel. This number will not have to change even when the user changes his devices. In fact, if a system administrator or other personnel provides the user with a new device (and the number/numbers of the device are stored in the user's profile in the database 270), the user may never know the actual numbers of the new device. The user only needs to remember this single contact number regardless of which device he/she is using (as long as the device and its contact number or numbers are stored in the database 270).

The user or system can publish this single contact number (as opposed to the multiple numbers associated with the many devices the user can associate with his/her account and extension) such as e.g., in business cards, user profile on a website, telephone directories, etc. This contact number can be placed into the ANI/DNIS information of placed calls, which helps mask the physical telephone number of the device from the other party on the call. This also means that people or organizations attempting to contact the user only require the single contact number, which is particularly advantageous.

For dual mode devices, there is often a telephone or contact number associated with the cellular mode of the device and a separate, different telephone or contact number associated with the data/WiFi mode of the device. When the user is registered with the server 30 and/or its system 10, 10a, the user does not need to know either number. In operation, the server 30 and the system 10, 10a essentially uses the cellular and Wifi modes of the device as two separate and individual phone lines, which provides many benefits as is described herein.

FIG. 6A is a flowchart illustrating an example operational method 600 of a system (e.g., system 10 illustrated in FIG. 1 or system 10a illustrated in FIG. 5A) constructed in accordance with an embodiment disclosed herein. The method 600 is preferably run in the business logic 255 located on the server 30 (FIGS. 2 and 3), but can be run anywhere within the server 30. The method 600 begins by detecting an incoming call to a user's extension or direct inward dial (DID) telephone number (step 602). An incoming station-to-station call (i.e., a direct extension call from one internal telephone device to another internal device) is received by the PBX 14 for an existing PBX extension, the PBX 14 looks up the PBX extension in the CDP steering table to determine where the call should be routed. Based on information in the CDP steering table, the call to the PBX extension is routed to the server 30 instead of being directly routed to an office telephone 12a. Inbound DID calls are received directly by the server 30 from e.g., the PSTN.

The server 30 reads the ANI/DNIS information from the incoming call to obtain the DNIS information and use this information to retrieve the called party's (i.e., user) User Profile (step 604). As noted above, the server 30 has assigned a new SERVER-PBX extension to each existing PBX extension. The SERVER-PBX extension and user preferences are obtained from database 270 through processor 250 by using, for example, the DNIS information as an index into the server 30 database 270. As explained above, the User Profile will contain routing information including the remote device 70 telephone numbers, voice mailbox numbers, and/or other identification numbers of communication devices associated with the called party's PBX extension.

In a preferred embodiment, the routing information will also include the Ring Type (field 542b of FIG. 5B) for determining how the inbound call should be routed. Presuming that the User Profile is not set to Do Not Disturb, or that the calling party is on the Do Not Disturb Exception list, at step 606, the server 30 determines whether the Ring Type is set to "Intelligent Ring." If the Ring Type is set to Intelligent Ring, the server 30 performs intelligent ring call routing (step 610). Otherwise, the server performs other call routing e.g., sequential ring, simultaneous ring or hybrid ring (as described above) based on the user preferences within the User Profile (step 608).

Generally, the intelligent ring option call routing allows inbound calls to be routed to the physical extension or particular remote devices based on the called party's historical call patterns and, if desired, more recent call behavior such as call history within e.g., the past 15-30 minutes or so (i.e., transient behavior). That is, based on the called party's prior call patterns, the server 30 is capable of determining which device (remote or otherwise) the user is most likely going to answer at this point in time.

Different heuristics can be used when basing call routing on a combination of different types of prior call patterns. Accordingly, in one embodiment, different types prior call patterns can be prioritized. For example, call routing can be determined according to most recent call history, e.g. transient behavior, if such information is available and relevant for the incoming call. In the absence of relevant transient call behavior, more established historical call patterns can be used to determine routing. In the absence of any of the two types call patterns, default settings can be used in routing the call.

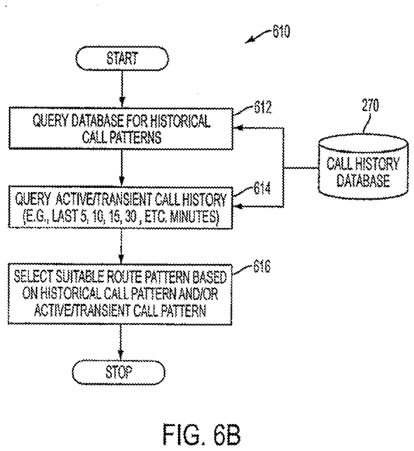

Referring to FIG. 6B, the intelligent ring call routing step 610 is now described in more detail according to an embodiment. Initially, at step 612, the server 30 queries the database 270 to retrieve the most suitable call pattern based on the current time and date, and the called party's historical call patterns stored in the database 270 (an example of how the historical call patterns are developed is explained below in more detail with reference to FIG. 7). At step 614, the server queries the database 270 to retrieve any transient call history information associated with the called party. Transient information can be any call information over the past 5, 10, 15, 30 minutes, etc., as determined by the User Profile or system-wide profile. Thus, if it exists, the transient information will be more recent than the historical call patterns, which have been established over much longer periods of time. In addition, the transient information can be used to verify that the historical call profiles are still accurate and/or show any deviations or anomalies within the historical call profiles.

At step 616, the server selects a suitable route for the incoming call based on the historical and transient call pattern information. That is, the server 30 determines which one of the remote devices, or the telephone located at the physical extension, the called party is most likely to answer the call at. In one embodiment, the call can be routed in accordance with the retrieved historical call pattern. For example, if the retrieved historical pattern indicates that between 11:30 am and 1:00 pm, Monday thru Friday, the user answers 90% of its calls at its primary cellular telephone number (e.g., Primary Cell illustrated in FIG. SB), the server 30 will ring the primary cellular telephone number first, even if an average user is typically in the office at that time, or even if the user's typical routing profile is setup to simultaneously ring his office telephone number, home telephone number and primary cellular telephone number.

In another embodiment, the can can be routed in accordance with the transient call history. For example, given the above established historical call pattern between 11:30 am and 1:00 pm, if the user has answered calls within the past fifteen minutes at his primary home telephone number (e.g., Primary Home illustrated in FIG. 5B), the server 30 may determine that the user is at home and deviate from the historical call pattern by initially calling the user's primary home telephone number before routing the can to the primary cellular telephone number, Thus, the transient (or active) call pattern information circumvented the historical call pattern in this instance by being given priority over the historical call pattern. Had there been no transient information, or if the user begins using its primary cellular telephone number again, the server 30 would go back to routing calls in accordance with the historical call information.

It will now be apparent to those skilled in the art that in other embodiments, different types of heuristics can be used when using different types of previous call usage as the basis of determining call routing. For example, certain types of defaults can be given priority over transient call history. One such case can be where the user is always at his or her desk at a certain time but loans his or her device to an assistant during that time. During such times the default should override transient call history. Moreover, it should be noted that any pattern that is selected based on transient and/or real-time information can subsequently be modified once it is determined that the user has begun using its expected device once again (i.e., the user has begun using the device consistent with the historical call pattern).

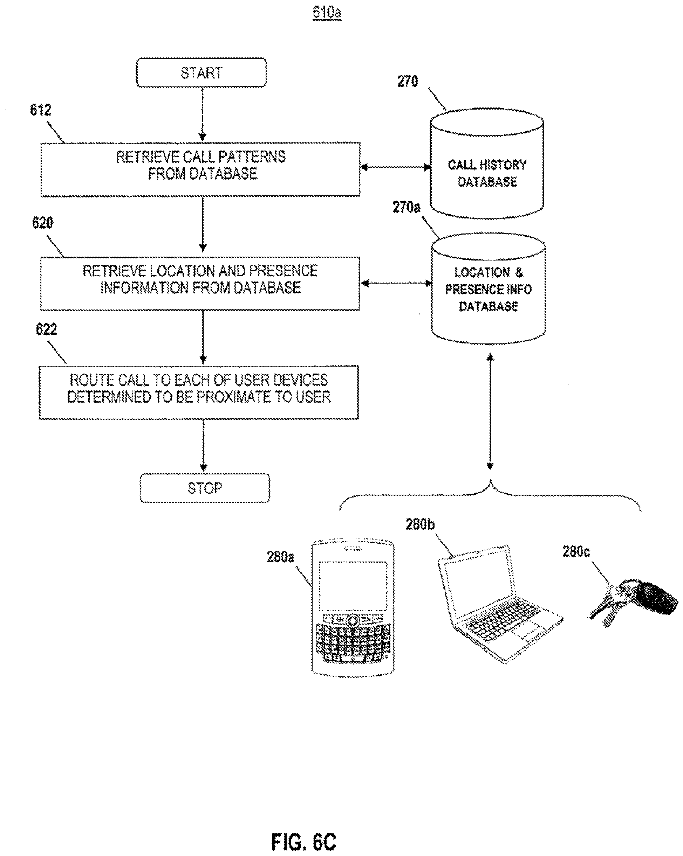

In yet other embodiments, other types of information besides prior call patterns can be used to determine call routing. In one such embodiment, real time information such as GPS locations and instant messaging (IM) information can be used. FIG. 6C illustrates a modified intelligent ring call routing step 610a in accordance with such an embodiment. The modified step 610a introduces (if available) location or proximity data from external sources (such as Bluetooth, RFID, GPS receivers, motion sensors and the like) as well as presence data (such as that which can be gathered from corporate or personal computer system activity) that may be relevant in the route selection for a call placed to the user. In the illustrated embodiment, step 610a includes a step 612 as described above with respect to FIG. 6B. At this point, the server 30 has retrieved at least one of historical call pattern and active/transient call pattern information (if available) and now seeks to input location or presence information concerning the user and his/her active devices (if available). The location or presence information can be stored in, and retrieved from, a database 270a (step 620) using the called party's extension as an index. Database 270a may be part of the database 270 or it may be a separate database. Moreover, database 270a may be stored in the same computer readable storage medium, device or server as database 270, or it may be stored in a separate medium/device/server.

The location or presence information stored in database 270a may include:
- GPS coordinate, radiolocation, or device connection information either obtained from one of exemplary user devices 280a, 280b, 280c directly or from a device service provider. For instance, if a mobile device 280a does not have a GPS receiver integrated, the device service provider may still be able to determine device 280a's location by one of triangulation between towers, location signature, or other radiolocation method. Mobile device 280a may be WiFi-enabled and triangulation between WiFi access points or radiolocation can be used to determine the location of that device. The device or its provider might also be capable of reporting which cellular tower or access point the device is connected to and the tower or access point's location.
- Internet protocol (IP) address information, which can be used to identify where devices (including, *e.g*., mobile device 280a, laptop 280b, music player, or other portable electronic device) known to be accessible by a user are located by determining what networks (wireless or wired) the device(s) are connected to. The IP address information can likewise be used to determine if the user is not near one or more of the telephony devices. For example, the IP address currently assigned to one of mobile device 280a or laptop 280b may indicate that the user is currently connected to a non-corporate network (*e.g*., at a coffee shop) and thereby is not in his/her individual office or home. IP address information can also be used, depending on the granularity of network setup, to identify what wired wall port a user's laptop 280b is plugged into, or which wireless access point a user's wireless-enabled mobile device 280a is connected to.
- Proximity information that may be provided by Bluetooth or RFID detection devices, which detect an RFID tag or the like that may be attached to one of the user's devices.
- Connection information, such as mobile device 280a being connected to a user's laptop 280b by Bluetooth, USB, or other form of communication can also be used to determine a location of the user. For example, the user's mobile device 280a may be plugged into a USB port with a known location.
- Security access control information, such as that provided by a separate security access control system to identify where a user might be located based on use of an access card or keyfob 280c. For example, use of the access card or keyfob 280c may indicate where the user has recently been in a corporate location (*e.g*., restricted access areas).
- Motion detection information, such as that provided by motion detectors placed in user-frequented locations such as an office or home.
- Computer/network access logs, whether related to a user's personal or corporate machine, which can be interpreted to show, e.g., that a user is logged in to a corporate machine in a guest office, or that the user is logged into a corporate system via remote access through their home machine.
- Application activity logs such as those that can provide relevant presence information, e.g., the user is logged into an application for which access is only permitted in a particular location, or on a particular computer).
- SIP connection information may also be stored in the database 270a.

All of the location or presence information can be used to determine if the retrieved call pattern (as modified by the transient information) should be adjusted/modified to create a suitable route pattern for the current incoming call (step 622). The suitable route pattern can include an ordering of telephony devices associated with the user that the system can call sequentially or simultaneously until answered (or enough time has passed such that the incoming telephone call should be diverted to voicemail). Any of the location or presence information that provides an indication of where devices associated with the user are presently located can be analyzed (by looking at location progression over time) to determine a direction in which the user is likely traveling (*e.g*., towards their office, or home) and the suitable route pattern can be adjusted to include telephony devices at a user's expected destination. For instance, if the location progression indicates a user is traveling in the direction of their home, the suitable route pattern might prioritize a user's home phone. It should be noted that any pattern that is selected based on location or presence information can subsequently and automatically be modified once it is determined that the user has begun using its expected device once again (i.e., the user has begun using the device consistent with the historical call pattern).

Thus, intelligent ring call routing enhances call routing by reducing the number of calls placed, which saves money and frees up communication lines and trunks. In addition, if location or presence information such as that described above is available, the Intelligent Ring option can utilize this information to further enhance the call routing and achieve live targeted call routing.

FIG. 7 is a flowchart illustrating an example of processing 700 performed by the server 30 to create and stone historical call patterns. Generally, the server 30 collects and saves historical call data and creates call patterns for each user based upon time of day, day of week (including known exceptions such as weekends, and holidays), and business requirements (e.g., being at the corporate office every third week of the month, annual or quarterly sales meetings, etc.). The data collected can include data relating to the user's primary office telephone number, primary cellular telephone number, primary home number, secondary office number, secondary cellular telephone number, or any other device telephone number registered by the user.

At step 702, the process 700 (via the business logic 255 of the server 30) determines the phone number (i.e., the phone number identified in field 505 of FIG. 5b) of the user's device answering an inbound call. It should be appreciated that the server 30 can also keep track of calls placed by a user's device if desired since outbound calls through the server 30 can also be tracked. At steps 704, 706 and 708, the server 30 respectively notes the time of day, day of week, and week of month of the detected call. The server 30 then also records any other available information (e.g., device telephone number, GPS location, wireless access point, etc.) that may contribute in a call pattern determination (step 710). The stored information is then mined to create as many call patterns as practical, which are then stored in database 270 or other storage accessible to the server 30 (step 712). In one embodiment, the call patterns are stored as a series of records in a call pattern table. The records could include start and stop times, day of week, week of month, etc. The records could be in 5, 10, 15, 30 minute intervals for each day, grouping of days, etc.

It should be appreciated that the embodiments disclosed herein are not limited to the manner in which the call patterns are created or stored. All that is required is that the patterns be available for use and/or updating during the operation of the system. Moreover, it should be noted that if a particular user does not have enough information for historical call patterns, such as e.g., a brand new user of the system, the server 30 will route calls to the user based on the user's activated devices in a default manner, which could include simultaneous or sequential ringing of the devices. Likewise if the call is not answered at the expected device (as determined by the call patterns, etc.), the call may then be routed to the user's other activated devices in the default manner, which could include simultaneous or sequential ringing of the devices.

It should be appreciated that the system could utilize "voice over IP" communications (i.e., voice over a data network) with appropriate remote devices. Many of today's wireless telephones and PDA's have the ability to place and receive cellular and data (voice over IP) telephone calls and to access the Internet or other data network. It should be appreciated that any conventional remote device could be used with system.

In one embodiment, remote device 70 can be implemented as mobile device 80D, illustrated in FIG. 8. Mobile device 800 is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device 800 and how it communicates with other devices and host systems, reference will now be made to FIGS. 8 through 11.

Referring to FIG. 8, shown therein is a block diagram of an exemplary embodiment of a mobile device 800. The mobile device 800 includes a number of components such as a main processor 802 that controls the overall operation of the mobile device 800. Communication functions, including data and voice communications, are performed through a communication subsystem 804. The communication subsystem 804 receives messages from and sends messages to a wireless network 850. In this exemplary embodiment of the mobile device 800, the communication subsystem 804 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 804 with the wireless network 850 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 850 associated with mobile device 800 is a GSM/GPRS wireless network in one exemplary implementation, other wireless networks may also be associated with the mobile device 800 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The main processor 802 also interacts with additional subsystems such as a Random Access Memory (RAM) 806, a flash memory 808, a display 810, an auxiliary input/output (I/O) subsystem 812, a data port 814, a keyboard 816, a speaker 818, a microphone 820, short-range communications 822 and other device subsystems 824.

Some of the subsystems of the mobile device 800 perform communication-related functions, whereas other subsystems may provide "resident" or on-device functions. By way of example, the display 810 and the keyboard 816 may be used for both communication-related functions, such as entering a text message for transmission over the network 850, and device-resident functions such as a calculator or task list.

The mobile device 800 can send and receive communication signals over the wireless network 850 after required network registration or activation procedures have been completed. Network access is associated with a subscriber or user of the mobile device 800. To identify a subscriber, the mobile device 800 requires a SIM/RUIM card 826 (i.e. Subscriber Identity Module or a Removable User Identity Module) to be inserted into a SIM/RUIM interface 828 in order to communicate with a network. The SIM card or RUIM 826 is one type of a conventional "smart card" that can be used to identify a subscriber of the mobile device 800 and to personalize the mobile device 800, among other things. Without the SIM card 826, the mobile device 800 is not fully operational for communication with the wireless network 850. By inserting the SIM catd/RUIM 826 into the SIM/RUIM interface 828, a subscriber can access all subscribed services. Services may include: web browsing and messaging such as e-mail, voicemail, Short Message Service (SMS), and Multimedia Messaging Services (MMS). More advanced services may include: point of sale, field service and sales force automation. The SIM card/RUIM 826 includes a processor and memory for storing information. Once the SIM cud/RUIM 826 is inserted into the SIM/RUIM interface 828, it is coupled to the main processor 802. In order to identify the subscriber, the SIM card/RUIM 826 can include some user parameters such as an International Mobile Subscriber Identity (IMSI). An advantage of using the SIM card/RUIM 826 is that a subscriber is not necessarily bound by any single physical mobile device. The SIM card/RUIM 826 may store additional subscriber information for a mobile device as well, including datebook (or calendar) information and recent call information. Alternatively, user identification information can also be programmed into the flash memory 808.

The mobile device 800 is a battery-powered device and includes a battery interface 832 for receiving one or more rechargeable batteries 830. In at least some embodiments, the battery 830 can be a smart battery with an embedded microprocessor. The battery interface 832 is coupled to a regulator (not shown), which assists the battery 830 in providing power V+ to the mobile device 800. Although current technology makes use of a battery, future technologies such as micro fuel cells may provide the power to the mobile device 800.

The mobile device 800 also includes an operating system 834 and software components 836 to 846 which are described in more detail below. The operating system 834 and the software components 836 to 846 that are executed by the main processor 802 are typically stored in a persistent store such as the flash memory 808, which may alternatively be a read-only memory (ROM) or similar storage element (not shown). Those skilled in the art will appreciate that portions of the operating system 834 and the software components 836 to 846, such as specific device applications, or parts thereof, may be temporarily loaded into a volatile store such as the RAM 806. Other software components can also be included, as is well known to those skilled in the art.

The subset of software applications 836 that control basic device operations, including data and voice communication applications, will normally be installed on the mobile device 800 during its manufacture. Other software applications include a message application 838 that can be any suitable software program that allows a user of the mobile device 800 to send and receive electronic messages, Various alternatives exist for the message application 838 as is well known to those skilled in the art. Messages that have been sent or received by the user are typically stored in the flash memory 808 of the mobile device 800 or some other suitable storage element in the mobile device 800. In at least some embodiment, some of the sent and received messages may be stored remotely from the device 800 such as in a data store of an associated host system that the mobile device 800 communicates with.

The software applications can further include a device state module 840, a Personal Information Manager (PIM) 842, and other suitable modules (not shown). The device state module 840 provides persistence, i.e. the device state module 840 ensures that important device data is stored in persistent memory, such as the flash memory 808, so that the data is not lost when the mobile device 800 is turned off or loses power.

The PIM 842 includes functionality for organizing and managing data items of interest to the user, such as, but not limited to, e-mail, contacts, calendar events, voicemails, appointments, and task items. A PIM application has the ability to send and receive data items via the wireless network 850. PIM data items may be seamlessly integrated, synchronized, and updated via the wireless network 850 with the mobile device subscriber's corresponding data items stored and/or associated with a host computer system. This functionality creates a mirrored host computer on the mobile device 800 with respect to such items. This can be particularly advantageous when the host computer system is the mobile device subscriber's office computer system.

The mobile device 800 also includes a connect module 844, and an IT policy module 846. The connect module 844 implements the communication protocols that are required for the mobile device 800 to communicate with the wireless infrastructure and any host system, such as an enterprise system, that the mobile device 800 is authorized to interface with. Examples of a wireless infrastructure and an enterprise system are given in FIGS. 10 and 11, which are described in more detail below.

The connect module 844 includes a set of APIs that can be integrated with the mobile device 800 to allow the mobile device 800 to use any number of services associated with the enterprise system. The connect module 844 allows the mobile device 800 to establish an end-to-end secure, authenticated communication pipe with the host system. A subset of applications for which access is provided by the connect module 844 can be used to pass IT policy commands from the host system to the mobile device 800. This can be done in a wireless or wired manner. These instructions can then be passed to the IT policy module 846 to modify the configuration of the device 800. Alternatively, in some cases, the IT policy update can also be done over a wired connection.

The IT policy module 846 receives IT policy data that encodes the IT policy. The IT policy module 846 then ensures that the IT policy data is authenticated by the mobile device 800. The IT policy data can then be stored in the flash memory 806 in its native form. After the IT policy data is stored, a global notification can be sent by the IT policy module 846 to all of the applications residing on the mobile device 800. Applications for which the IT policy may be applicable then respond by reading the IT policy data to look for IT policy rules that are applicable.

The IT policy module 846 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module 846 can determine which applications are affected by the IT policy data and send a notification to only those applications. In either of these cases, for applications that arent running at the time of the notification, the applications can call the parser or the IT policy module 846 when they are executed to determine if there are any relevant IT policy rules in the newly received IT policy data.

All applications that support rules in the IT Policy are coded to know the type of data to expect For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 846 sends an acknowledgement back to the host system to indicate that the IT policy data was received and successfully applied.

Other types of software applications can also be installed on the mobile device 800. These software applications can be third party applications, which are added after the manufacture of the mobile device 800. Examples of third party applications include games, calculators, utilities, etc.

The additional applications can be loaded onto the mobile device 800 through at least one of the wireless network 850, the auxiliary I/O subsystem 812, the data port 814, the short-range communications subsystem 822, or any other suitable device subsystem 824. This flexibility in application installation increases the functionality of the mobile device 800 and may provide enhanced on-device functions, communication-related functions, or both. For example, secure communication applications may enable electronic commerce functions and other such financial transactions to be performed using the mobile device 800.

The data port 814 enables a subscriber to set preferences through an external device or software application and extends the capabilities of the mobile device 800 by providing for information or software downloads to the mobile device 800 other than through a wireless communication network. The alternate download path may, for example, be used to load an encryption key onto the mobile device 800 through a direct and thus reliable and trusted connection to provide secure device communication.

The data port 814 can be any suitable port that enables data communication between the mobile device 800 and another computing device. The data port 814 can be a serial or a parallel port. In some instances, the data port 814 can be a USB port that includes data lines for data transfer and a supply line that can provide a charging current to charge the battery 830 of the mobile device 800.

The short-range communications subsystem 822 provides for communication between the mobile device 800 and different systems or devices, without the use of the wireless network 850. For example, the subsystem 822 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 804 and input to the main processor 802. The main processor 802 will then process the received signal for output to the display 810 or alternatively to the auxiliary I/O subsystem 812. A subscriber may also compose data items, such as e-mail messages, for example, using the keyboard 816 in conjunction with the display 810 and possibly the auxiliary I/O subsystem 812. The auxiliary subsystem 812 may include devices such as: a touch screen, mouse, track ball, infrared fingerprint detector, or a roller wheel with dynamic button pressing capability. The keyboard 816 is preferably an alphanumeric keyboard and/or telephone-type keypad. However, other types of keyboards may also be used. A composed item may be transmitted over the wireless network 850 through the communication subsystem 804.

For voice communications, the overall operation of the mobile device 800 is substantially similar, except that the received signals are output to the speaker 818, and signals for transmission are generated by the microphone 820. Alternative voice or audio I/O subsystems, such as a voice message recording subsystem, can also be implemented on the mobile device 800. Although voice or audio signal output is accomplished primarily through the speaker 818, the display 810 can also be used to provide additional information such as the identity of a calling party, duration of a voice call, or other voice call related information.

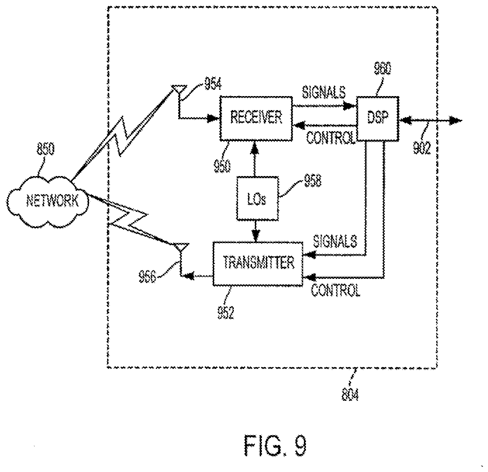

Referring to FIG. 9, an exemplary block diagram of the communication subsystem component 804 is shown. The communication subsystem 804 includes a receiver 950, a transmitter 952, as well as associated components such as one or more embedded or internal antenna elements 954 and 956, Local Oscillators (LOs) 958, and a processing module such as a Digital Signal Processor (DSP) 960. The particular design of the communication subsystem 804 is dependent upon the communication network 850 with which the mobile device 800 is intended to operate. Thus, it should be understood that the design illustrated in FIG. 9 serves only as one example.

Signals received by the antenna 954 through the wireless network 850 are input to the receiver 950, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 960. In a similar manner, signals to be transmitted are processed, including modulation and encoding, by the DSP 960. These DSP-processed signals are input to the transmitter 952 for digital-to-analog (D/A) conversion, frequency up conversion, filtering, amplification and transmission over the wireless network 850 via the antenna 956. The DSP 960 not only processes communication signals, but also provides for receiver and transmitter control. For example, the gains applied to communication signals in the receiver 950 and the transmitter 952 may be adaptively controlled through automatic gain control algorithms implemented in the DSP 960.

The wireless link between the mobile device 800 and the wireless network 850 can contain one or more different channels, typically different RF channels, and associated protocols used between the mobile device 800 and the wireless network 850. An RF channel is a limited resource that must be conserved, typically due to limits in overall bandwidth and limited battery power of the mobile device 800.

When the mobile device 800 is fully operational, the transmitter 952 is typically keyed or turned on only when it is transmitting to the wireless network 850 and is otherwise turned off to conserve resources. Similarly, the receiver 950 is periodically turned off to conserve power until it is needed to receive signals or information (if at all) during designated time periods.

Referring to FIG. 10, a block diagram of an exemplary implementation of a node 1002 of the wireless network 850 is shown. In practice, the wireless network 850 comprises one or more nodes 1002. In conjunction with the connect module 844, the mobile device 800 can communicate with the node 1002 within the wireless network 850. In the exemplary implementation of FIG. 10, the node 1002 is configured in accordance with General Packet Radio Service (GPRS) and Global Systems for Mobile (GSM) technologies. The node 1002 includes a base station controller (BSC) 1004 with an associated tower station 1006, a Packet Control Unit (PCU) 1008 added for GPRS support in GSM, a Mobile Switching Center (MSC) 1010, a Home Location Register (HLR) 1012, a Visitor Location Registry (VLR) 1014, a Serving GPRS Support Node (SGSN) 1016, a Gateway GPRS Support Node (GGSN) 1018, and a Dynamic Host Configuration Protocol (DHCP) 1020. This list of components is not meant to be an exhaustive list of the components of every node 1002 within a GSM/GPRS network, but rather a list of components that are commonly used in communications through the network 850.

In a GSM network, the MSC 1010 is coupled to the BSC 1004 and to a landline network, such as a Public Switched Telephone Network (PSTN) 1022 to satisfy circuit switched requirements. The connection through the PCU 1008, the SGSN 1016 and the OGSN 1018 to a public or private network (Internet) 1024 (also referred to herein generally as a shared network infrastructure) represents the data path for GPRS capable mobile devices. In a GSM network extended with GPRS capabilities, the BSC 1004 also contains the Packet Control Unit (PCU) 1008 that connects to the SGSN 1016 to control segmentation, radio channel allocation and to satisfy packet switched requirements. To track the location of the mobile device 800 and availability for both circuit switched and packet switched management, the HLR 1012 is shared between the MSC 1010 and the SGSN 1016. Access to the VLR 1014 is controlled by the MSC 1010.

The station 1006 is a fixed transceiver station and together with the BSC 1004 form fixed transceiver equipment The fixed transceiver equipment provides wireless network coverage for a particular coverage area commonly referred to as a "cell". The fixed transceiver equipment transmits communication signals to and receives communication signals from mobile devices within its cell via the station 1006. The fixed transceiver equipment normally performs such functions as modulation and possibly encoding and/or encryption of signals to be transmitted to the mobile device 800 in accordance with particular, usually predetermined, communication protocols and parameters, under control of its controller. The fixed transceiver equipment similarly demodulates and possibly decodes and decrypts, if necessary, any communication signals received from the mobile device 800 within its cell Communication protocols and parameters may vary between different nodes. For example, one node may employ a different modulation scheme and operate at different frequencies than other nodes.

For all mobile devices 800 registered with a specific network, permanent configuration data such as a user profile is stored in the HLR 1012. The HLR 1012 also contains location information for each registered mobile device and can be queried to determine the current location of a mobile device. The MSC 1010 is responsible for a group of location areas and stores the data of the mobile devices currently in its area of responsibility in the VLR 1014. Further, the VLR 1014 also contains information on mobile devices that are visiting other networks. The information in the VLR 1014 includes part of the permanent mobile device data transmitted from the HLR 1012 to the VLR 1014 for faster access. By moving additional information from a remote HLR 1012 node to the VLR 1014, the amount of traffic between these nodes can be reduced so that voice and data services can be provided with faster response times and at the same time requiring less use of computing resources.

The SGSN 1016 and the GGSN 1018 are elements added for GPRS support; namely packet switched data support, within GSM. The SGSN 1016 and the MSC 1010 have similar responsibilities within the wireless network 850 by keeping track of the location of each mobile device 800. The SGSN 1016 also performs security functions and access control for data traffic on the wireless network 800. The GGSN 1018 provides internetworking connections with external packet switched networks and connects to one or more SGSN's 1016 via an Internet Protocol (IP) backbone network operated within the network 850. During normal operations, a given mobile device 800 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 1020 connected to the GGSN 1018. There are many mechanisms for dynamic IP assignment, including using a combination of a Remote Authentication Dial-In User Service (RADIUS) server and a DHCP server. Once the GPRS Attach is complete, a logical connection is established from a mobile device 800, through the PCU 1008, and the SGSN 1016 to an Access Point Node (APN) within the GGSN 1018. The APN represents a logical end of an IP tunnel that can either access direct Internet compatible services or private network connections. The APN also represents a security mechanism for the network 850, insofar as each mobile device 800 must be assigned to one or more APNs and mobile devices 800 cannot exchange data without first performing a GPRS Attach to an APN that it has been authorized to use. The APN may be considered to be similar to an Internet domain name such as "myconnection.wiress.com."

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 850. To maximize use of the PDP Contexts, the network 800 will run an idle timer for each PDP Context to determine if there is a lack of activity. When a mobile device 800 is not using its PDP Context, the PDP Context can be de-allocated and the IP address returned to the IP address pool managed by the DHCP server 1020.

Referring to FIG. 11, shown therein is a block diagram illustrating components of an exemplary configuration of a host system 480 that the mobile device 800 can communicate with in conjunction with the connect module 844. The host system 480 will typically be a corporate enterprise or other local area network (LAN), but may also be a home office computer or some other private system, for example, in variant implementations. In this example shown in FIG. 11, the host system 480 is depicted as a LAN of an organization to which a user of the mobile device 800 belongs. Typically, a plurality of mobile devices can communicate wirelessly with the host system 480 through one or more nodes 1002 of the wireless network 850.

The host system 480 comprises a number of network components connected to each other by a network 1160. For instance, a user's desktop computer 1162a with an accompanying cradle 1164 for the user's mobile device 800 is situated on a LAN connection. The cradle 1164 for the mobile device 800 can be coupled to the computer 1162a by a serial or a Universal Serial Bus (USB) connection, for example. Other user computers 1162b-1162n are also situated on the network 1160, and each may or may not be equipped with an accompanying cradle 1164. The cradle 1164 facilitates the loading of information (e.g. PIM data, private symmetric encryption keys to facilitate secure communications) from the user computer 1162a to the mobile device 800, and may be particularly useful for bulk information updates often performed in initializing the mobile device 800 for use. The information downloaded to the mobile device 800 may include certificates used in the exchange of messages.

It will be understood by persons skilled in the art that the user computers 1162a-1162n will typically also be connected to other peripheral devices, such as printers, etc. which are not explicitly shown in FIG. 11. Furthermore, only a subset of network components of the host system 480 are shown in FIG. 11 for ease of exposition, and it will be understood by persons skilled in the art that the host system 480 will comprise additional components that are not explicitly shown in FIG. 11 for this exemplary configuration. More generally, the host system 480 may represent a smaller part of a larger network (not shown) of the organization, and may comprise different components and/or be arranged in different topologies than that shown in the exemplary embodiment of FIG. 11.

To facilitate the operation of the mobile device 800 and the wireless communication of messages and message-related data between the mobile device 800 and components of the host system 480, a number of wireless communication support components 1170 can be provided. In some implementations, the wireless communication support components 1 170 can include a message management server 1172, a mobile data server 1174, a contact server 1176, and a device manager module 1178. The device manager module 1178 includes an IT Policy editor 1180 and an IT user property editor 1182, as well as other software components for allowing an IT administrator to configure the mobile devices 800. In an alternative embodiment, there may be one editor that provides the functionality of both the IT policy editor 1180 and the IT user property editor 1182. The support components 1170 also include a data store 1184, and an IT policy server 1186. The IT policy server 286 includes a processor 1188, a network interface 1190 and a memory unit 1192. The processor 1188 controls the operation of the IT policy server 1186 and executes functions related to the standardized IT policy as described below. The network interface 1190 allows the IT policy server 1186 to communicate with the various components of the host system 480 and the mobile devices 800. The memory unit 1192 can store functions used in implementing the IT policy as well as related data. Those skilled in the art know how to implement these various components. Other components may also be included as is well known to those skilled in the art. Further, in some implementations, the data store 1184 can be part of any one of the servers.

In this exemplary embodiment, the mobile device 800 communicates with the host system 480 through node 1002 of the wireless network 850 and a shared network infrastructure 1124 such as a service provider network or the public Internet. Access to the host system 480 may be provided through one or more routers (not shown), and computing devices of the host system 480 may operate from behind a firewall or proxy server 1166. The proxy server 1166 provides a secure node and a wireless internet gateway for the host system 480. The proxy server 1166 intelligently routes data to the correct destination server within the host system 480.

In some implementations, the host system 480 can include a wireless VPN router (not shown) to facilitate data exchange between the host system 480 and the mobile device 800. The wireless VPN router allows a VPN connection to be established directly through a specific wireless network to the mobile device 800. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 800 in this alternative implementation.

Messages intended for a user of the mobile device 800 are initially received by a message server 1168 of the host system 480. Such messages may originate from any number of sources. For instance, a message may have been sent by a sender from the computer 1162b within the host system 480, from a different mobile device (not shown) connected to the wireless network 850 or a different wireless network, or from a different computing device, or other device capable of sending messages, via the shared network infrastructure 1124, possibly through an application service provider (ASP) or Internet service provider (ISP), for example.

The message server 1168 typically acts as the primary interface for the exchange of messages, particularly e-mail messages, within the organization and over the shared network infrastructure 1124. Each user in the organization that has been set up to send and receive messages is typically associated with a user account managed by the message server 1168. Some exemplary implementations of the message server 1168 include a Microsoft Exchange™ server, a Lotus Domino™ server, a Novell Groupwise™ server, or another suitable mail server installed in a corporate environment. In some implementations, the host system 480 may comprise multiple message servers 1168. The message server 1168 may also be adapted to provide additional functions beyond message management, including the management of data associated with calendars and task lists, for example.

When messages are received by the message server 1168, they are typically stored in a data store associated with the message server 1168. In at least some embodiments, the data store may be a separate hardware unit, such as data store 1184, that the message server 1168 communicates with. Messages can be subsequently retrieved and delivered to users by accessing the message server 1168. For instance, an e-mail client application operating on a user's computer 1162a may request the e-mail messages associated with that user's account stored on the data store associated with the message server 1168. These messages are then retrieved from the data store and stored locally on the computer 1162a. The data store associated with the message server 1168 can store copies of each message that is locally stored on the mobile device 800. Alternatively, the data store associated with the message server 1168 can store all of the messages for the user of the mobile device 800 and only a smaller number of messages can be stored on the mobile device 800 to conserve memory. For instance, the most recent messages (i.e., those received in the past two to three months for example) can be stored on the mobile device 800.

When operating the mobile device 800, the user may wish to have e-mail messages retrieved for delivery to the mobile device 800. The message application 838 operating on the mobile device 800 may also request messages associated with the user's account from the message server 1168. The message application 838 may be configured (either by the user or by an administrator, possibly in accordance with an organization's information technology (IT) policy) to make this request at the direction of the user, at some predefined time interval, or upon the occurrence of some pre-defined event. In some implementations, the mobile device 800 is assigned its own e-mail address, and messages addressed specifically to the mobile device 800 are automatically redirected to the mobile device 800 as they are received by the message server 1168.

The message management server 1172 can be used to specifically provide support for the management of messages, such as e-mail messages, that are to be handled by mobile devices. Generally, while messages are still stored on the message server 1168, the message management server 1172 can be used to control when, if, and how messages are sent to the mobile device 800. The message management server 1172 also facilitates the handling of messages composed on the mobile device 800, which are sent to the message server 1168 for subsequent delivery.

For example, the message management server 1172 may monitor the user's "mailbox" (e.g. the message store associated with the user's account on the message server 1168) for new e-mail messages, and apply user-definable filters to new messages to determine if and how the messages are relayed to the user's mobile device 800. The message management server 1172 may also compress and encrypt new messages (e.g. using an encryption technique such as Data Encryption Standard (DES), Triple DES, or Advanced Encryption Standard (AES)) and push them to the mobile device 800 via the shared network infrastructure 1124 and the wireless network 850. The message management server 1172 may also receive messages composed on the mobile device 800 (e.g. encrypted using Triple DES), decrypt and decompress the composed messages, re-format the composed messages if desired so that they will appear to have originated from the user's computer 1162a, and reroute the composed messages to the message server 1168 for delivery.

Certain properties or restrictions associated with messages that are to be sent from and/or received by the mobile device 800 can be defined (e.g. by an administrator in accordance with IT policy) and enforced by the message management server 1172. These may include whether the mobile device 800 may receive encrypted and/or signed messages, minimum encryption key sizes, whether outgoing messages must be encrypted and/or signed, and whether copies of all secure messages sent from the mobile device 800 are to be sent to a pre-defined copy address, for example.

The message management server 1172 may also be adapted to provide other control functions, such as only pushing certain message information or pre-defined portions (e.g. "blocks") of a message stored on the message server 1168 to the mobile device 800. For example, in some cases, when a message is initially retrieved by the mobile device 800 from the message server 1168, the message management server 1172 may push only the first part of a message to the mobile device 800, with the part being of a pre-defined size (e.g. 2 KB). The user can then request that more of the message be delivered in similar-sized blocks by the message management server 1172 to the mobile device 800, possibly up to a maximum pre-defined message size. Accordingly, the message management server 1172 facilitates better control over the type of data and the amount of data that is communicated to the mobile device 800, and can help to minimize potential waste of bandwidth or other resources.

The mobile data server 1174 encompasses any other server that stores information that is relevant to the corporation. The mobile data server 1174 may include, but is not limited to, databases, online data document repositories, customer relationship management (CRM) systems, or enterprise resource planning (BRP) applications.

The contact server 1176 can provide information for a list of contacts for the user in a similar fashion as the address book on the mobile device 800. Accordingly, for a given contact, the contact server 1176 can include the name, phone number, work address and e-mail address of the contact, among other information. The contact server 1176 can also provide a global address list that contains the contact information for all of the contacts associated with the host system 480.

It will be understood by persons skilled in the art that the message management server 1172, the mobile data server 1174, the contact server 1176, the device manager module 1178, the data store 1184 and the IT policy server 1186 do not need to be implemented on separate physical servers within the host system 480. For example, some or all of the functions associated with the message management server 1172 may be integrated with the message sarver 1168, or some other server in the host system 480. Alternatively, the host system 840 may comprise multiple message management servers 1172, particularly in variant implementations where a large number of mobile devices need to be supported.

Alternatively, in some embodiments, the IT policy server 1186 can provide the IT policy editor 1180, the IT user property editor 1182 and the data store 1184. In some cases, the IT policy server 1186 can also provide the device manager module 1178. The processor 1188 can execute the editors 1180 and 1182. In some cases, the functionality of the editors 1180 and 1182 can be provided by a single editor. In some cases, the memory unit 1192 can provide the data store 1184.

The device manager module 1178 provides an IT administrator with a graphical user interface with which the IT administrator interacts to configure various settings for the mobile devices 800. As mentioned, the IT administrator can use IT policy rales to define behaviors of certain applications on the mobile device 800 that are permitted such as phone, web browser or Instant Messenger use. The IT policy rules can also be used to set specific values for configuration settings that an organization requires on the mobile devices 800 such as auto signature text, WLAN/VoIP/VPN configuration, security requirements (e.g. encryption algorithms, password rules, etc.), specifying themes or applications that are allowed to run on the mobile device 800, and the like.

While preferred embodiments have been specifically described and illustrated herein, it should be apparent that many modifications to the embodiments can be made. For example, while the preferred embodiments illustrated herein have been limited to the processing of voice (packet or circuit switched) calls, it should be readily apparent that any form of call (e.g., audio, video, data) may be processed through server 30 to any communication device (e.g., cellular phone, pager, office/residential landline telephone, computer terminal, personal digital assistant (PDA), RIM device, etc.). The individual method steps of the example operational flows illustrated in FIGS. 6A-7 may be interchanged, combined, replaced or even added as appropriate. Any number of different operations not illustrated herein may be performed utilizing the invention. Moreover, the method steps may be performed by hardware, software, firmware or any combinations of hardware, software, firmware or logic elements.

In addition, while the illustrated embodiments have demonstrated implementations using PBX-based communication systems, it should be readily apparent that the server module may be connected (directly, indirectly, co-located, or remotely) with any other network switching device or communication system used to process calls such as a central switching office, centrex system, or Internet server for telephone calls made over the public switched telephone network, private telephone networks, or even Internet Protocol (IP) telephony networks made over the It should be understood by those skilled in the art that the embodiments disclosed do not need a PBX to operate or to perform any of the processing described above. All that is required is a properly programmed server 30.

It should be apparent that, while only PRI lines (e.g., between PBX 14 and server 30, between PBX 14 and PSTN 16) have been illustrated in discussing the preferred embodiments, these communication lines (as well as any other communication lines or media discussed herein) may be of any form, format, or medium (e.g., PRI, TI, OC3, electrical, optical, wired, wireless, digital, analog, etc.). Moreover, although PSTN 16, 54 are depicted as separate networks for illustration purposes, it should be readily apparent that a single PSTN network alone may be used in practice. It should be noted that the server 30 could trunk back to the PBX 14 instead of being directly connected to the PSTN 54. The use of a commercial wireless carrier network (represented by wireless switch 58 and antenna 60) as described herein may be implemented using one or more commercial carriers using the same or different signaling protocols (e.g., Sprint/Nextel, etc.) depending on the communication devices registered with the system.

The modules described herein such as the modules making up server 30, as well as server 30 and PBX 14 themselves, may be one or more hardware, software, or hybrid components residing in (or distributed among) one or more local or remote systems. It should be readily apparent that the modules may be combined (e.g., server 30 and PBX 14) or further separated into a variety of different components, sharing different resources (including processing units, memory, clock devices, software routines, etc.) as required for the particular implementation of the embodiments disclosed herein. Indeed, even a single general purpose computer executing a computer program stored on a recording medium to produce the functionality and any other memory devices referred to herein may be utilized to implement the illustrated embodiments. User interface devices utilized by in or in conjunction with server 30 may be any device used to input and/or output information. The interface devices may be implemented as a graphical user interface (GUI) containing a display or the like, or may be a link to other user input/output devices known in the art.

Furthermore, memory units employed by the system may be any one or more of the known storage devices (e.g., Random Access Memory (RAM), Read Only Memory (ROM), hard disk drive (HDD), floppy drive, zip drive, compact disk-ROM. DVD, bubble memory, etc.), and may also be one or more memory devices embedded within a CPU, or shared with one or more of the other components.

## Claims

1. A method (610a) of routing a telephone communication, the method comprising the steps of:
detecting an incoming telephone call to a primary telephone number;
retrieving a call pattern of a user associated with the primary telephone number (612);
retrieving location or presence information (270a) associated with the user associated with the primary telephone number (620);
determining, using the location or presence information, if the retrieved call pattern requires modification for routing the telephone call; and if so, modifying the call pattern, using the location or presence information to create a route pattern (622) for the current incoming call, including an ordering of telephony devices associated with the user that can be called sequentially or simultaneously; and
selecting, based on the route pattern, which of a plurality of telephony devices (70, 280a) associated with the user determined to be proximate the user to route the incoming telephone call to.

2. The method of claim 1, further comprising selecting more than one telephony device; and routing, based on the route pattern, the telephone call simultaneously to each of a plurality of telephony devices (70, 280a) associated with the user that are determined to be proximate the user (622).

3. The method of claim 1, further comprising selecting telephony devices by determining, based on the location or presence information and the retrieved call pattern an ordering of the plurality of telephony devices associated with the user to prioritize telephony devices determined to be proximate to the user and routing, based on the route pattern, the telephone call sequentially according to the determined ordering of telephony devices until the call is answered.

4. The method of claim 2, further including a step of using the retrieved call pattern to determine which of the plurality of telephony devices (70, 280a) associated with the user are proximate to the user.

5. The method of claim 2, wherein the location or presence information retrieved corresponds to at least one electronic device (70, 280a, 280b) associated with the user.

6. The method of claim 5, wherein the location or presence information comprises location information obtained from the at least one electronic device (70, 280a, 280b) or from a service provider associated with the at least one electronic device (70, 280a, 280b).

7. The method of claim 5, wherein the location or presence information comprises internet protocol (IP) address information of a second device associated with the user.

8. The method of claim 2, wherein the location or presence information comprises whether one of the telephony devices (70, 280a) associated with the user is connected to a computer associated with the user.

9. The method of claim 2, wherein the location or presence information comprises security access control records associated with the user.

10. The method of claim 2, wherein the location or presence information comprises network access log records associated with the user.

11. The method of claim 3, further including a step of using the retrieved call pattern to determine the ordering of the plurality of telephony devices associated with the user.

12. The method of claim 3, wherein each telephony device (70, 280a) is active to receive the telephone call for a predetermined time before the next telephony device in the ordering is activated.

13. The method of claim 3, wherein the plurality of telephony devices (70, 280a) can be ordered so that more than one telephony device can be simultaneously active to receive the telephone call.

14. The method of claim 3, wherein the determining step (622) further includes analyzing the location information to determine a destination of the user and prioritizing any telephony devices associated with the destination.

15. The method of claim 3, wherein the location or presence information indicates whether one of the telephony devices associated with the user is connected to a computer associated with the user.

16. A telecommunications system (30) comprising:
a computer readable storage medium having a database (270, 270a) comprising a plurality of user profiles, each profile being associated with a respective primary telephone number of the system, and a plurality of user call patterns associated with each telephone number; and
a processor configured to route an incoming telephone call placed to one of the primary telephone numbers by:
detecting a called number from the incoming telephone call,
retrieving location or presence information (620) associated with the user associated with the called number,
retrieving a call pattern (612) of a user associated with the called number using the detected called number as an index into the database;
determining, using the location or presence information, if the retrieved call pattern requires modification for routing the telephone call; and if so, modifying the call pattern, using the location or presence information to create a route pattern (622) for the incoming call, including an ordering of telephony devices associated with the user that can be sequentially or simultaneously;
and
selecting, based on the route pattern, which of a plurality of telephony devices (70, 280a) associated with the user determined to be proximate the user to route the incoming telephone call to.

17. The system of claim 16, wherein the processor is further configured to select more than one telephony device (70, 280a) and route the incoming telephone call to the selected devices simultaneously.

18. The system of claim 16, wherein the processor selects telephony devices by determining, based on the location or presence information and the retrieved call pattern an ordering of the plurality of telephony devices associated with the user to prioritize telephony devices determined to be proximate to the user and sequentially routes the incoming telephone call to the ordering of telephony devices until the call is answered (622).

19. The system of claim 18, wherein the plurality of telephony devices (70, 280a) can be ordered so that more than one telephony device can be simultaneously active to receive the telephone call.

20. The system of claim 16, wherein the location or presence information comprises location information obtained from at least one electronic device (70, 280a, 280b) associated with the user or from a service provider associated with the at least one electronic device (70, 280a, 280b).

21. The system of claim 16, wherein the location or presence information indicates whether one of the telephony devices (70, 280a) associated with the user is connected to a computer (280b) associated with the user.

22. A computer-readable medium containing instructions that, when executed by a processor, perform the steps of any one of claims 1-15.

## Patentansprüche

1. Verfahren (610a) zum Routen einer Telefonkommunikation, wobei das Verfahren die folgenden Schritte umfasst:
Detektieren eines eingehenden Telefonanrufs zu einer primären Telefonnummer;
Abrufen eines Anrufmusters eines Benutzers, der mit der primären Telefonnummer assoziiert ist (612);
Abrufen von Standort- oder Präsenzinformationen (270a), die mit dem Benutzer assoziiert sind, der mit der primären Telefonnummer assoziiert ist (620);
Bestimmen, unter Verwendung der Standort- oder Präsenzinformationen, ob das abgerufene Anrufmuster eine Modifizierung zum Routen des Telefonanrufs benötigt; und falls dem so ist, Modifizieren des Anrufmusters unter Verwendung der Standort- oder Präsenzinformationen, um ein Routenmuster (622) für den gegenwärtigen eingehenden Anruf zu erzeugen, einschließlich einer Reihenfolge von Telefonieeinrichtungen, die mit dem Benutzer assoziiert sind und sequenziell oder gleichzeitig angerufen werden können; und
Auswählen, basierend auf dem Routenmuster, zu welcher von mehreren Telefonieeinrichtungen (70, 280a), die mit dem Benutzer assoziiert sind und als sich in der Nähe des Benutzers befindlich bestimmt wurden, der eingehende Telefonanruf geroutet werden soll.

2. Verfahren nach Anspruch 1, ferner umfassend Auswählen von mehr als einer Telefonieeinrichtung; und gleichzeitiges Routen, basierend auf dem Routenmuster, des Telefonanrufs zu jeder von mehreren Telefonieeinrichtungen (70, 280a), die mit dem Benutzer assoziiert sind und als sich in der Nähe des Benutzers befindlich bestimmt wurden (622).

3. Verfahren nach Anspruch 1, ferner umfassend Auswählen von Telefonieeinrichtungen durch Bestimmen, basierend auf den Standort- oder Präsenzinformationen und dem abgerufenen Anrufmuster, einer Reihenfolge der mehreren Telefonieeinrichtungen, die mit dem Benutzer assoziiert sind, um Telefonieeinrichtungen zu priorisieren, die als sich in der Nähe des Benutzers befindlich bestimmt wurden, und sequenzielles Routen, basierend auf dem Routenmuster, des Telefonanrufs gemäß der bestimmten Reihenfolge von Telefonieeinrichtungen, bis der Anruf angenommen wird.

4. Verfahren nach Anspruch 2, ferner beinhaltend einen Schritt zum Verwenden des abgerufenen Anrufmusters, um zu bestimmen, welche der mehreren Telefonieeinrichtungen (70, 280a), die mit dem Benutzer assoziiert sind, sich in der Nähe des Benutzers befinden.

5. Verfahren nach Anspruch 2, wobei die abgerufenen Standort- oder Präsenzinformationen mindestens einer elektronischen Einrichtung (70, 280a, 280b) entsprechen, die mit dem Benutzer assoziiert ist.

6. Verfahren nach Anspruch 5, wobei die Standort- oder Präsenzinformationen Standortinformationen umfassen, die von der mindestens einen elektronischen Einrichtung (70, 280a, 280b) oder von einem Dienstanbieter, der mit der mindestens einen elektronischen Einrichtung (70, 280a, 280b) assoziiert ist, erhalten werden.

7. Verfahren nach Anspruch 5, wobei die Standort- oder Präsenzinformationen Internetprotokoll(IP)-Adressinformationen einer zweiten Einrichtung, die mit dem Benutzer assoziiert ist, umfassen.

8. Verfahren nach Anspruch 2, wobei die Standort- oder Präsenzinformationen umfassen, ob eine der Telefonieeinrichtungen (70, 280a), die mit dem Benutzer assoziiert ist, mit einem Computer, der mit dem Benutzer assoziiert ist, verbunden ist.

9. Verfahren nach Anspruch 2, wobei die Standort- oder Präsenzinformationen Sicherheitszugangssteuerungsdatensätze umfassen, die mit dem Benutzer assoziiert sind.

10. Verfahren nach Anspruch 2, wobei die Standort- oder Präsenzinformationen Netzwerkzugriffsprotokolldatensätze umfassen, die mit dem Benutzer assoziiert sind.

11. Verfahren nach Anspruch 3, ferner beinhaltend einen Schritt zum Verwenden des abgerufenen Anrufmusters, um die Reihenfolge der mehreren Telefonieeinrichtungen, die mit dem Benutzer assoziiert sind, zu bestimmen.

12. Verfahren nach Anspruch 3, wobei jede Telefonieeinrichtung (70, 280a) aktiviert ist, den Telefonanruf für eine vorbestimmte Zeit zu empfangen, bevor die nächste Telefonieeinrichtung in der Reihenfolge aktiviert wird.

13. Verfahren nach Anspruch 3, wobei die mehreren Telefonieeinrichtungen (70, 280a) so geordnet werden können, dass mehr als eine Telefonieeinrichtung gleichzeitig aktiviert sein kann, um den Telefonanruf zu empfangen.

14. Verfahren nach Anspruch 3, wobei der Bestimmungsschritt (622) ferner ein Analysieren der Standortinformationen beinhaltet, um einen Ziel des Benutzers zu bestimmen und jegliche Telefonieeinrichtungen zu priorisieren, die mit dem Ziel assoziiert sind.

15. Verfahren nach Anspruch 3, wobei die Standort- oder Präsenzinformationen angeben, ob eine der Telefonieeinrichtungen, die mit dem Benutzer assoziiert sind, mit einem Computer, der mit dem Benutzer assoziiert ist, verbunden ist.

16. Telekommunikationssystem (30), umfassend:
ein computerlesbares Speichermedium mit einer Datenbank (270, 270a), die mehrere Benutzerprofile, wobei jedes Profil mit einer jeweiligen primären Telefonnummer des Systems assoziiert ist, und mehrere Benutzeranrufmuster, die mit jeder Telefonnummer assoziiert sind, umfasst; und
einen Prozessor, der dazu ausgelegt ist, einen eingehenden Telefonanruf zu routen, der zu einer der primären Telefonnummern getätigt wird, durch Folgendes:
Detektieren einer angerufenen Nummer vom eingehenden Telefonanruf,
Abrufen von Standort- oder Präsenzinformationen (620), die mit dem Benutzer assoziiert sind, der mit der angerufenen Nummer assoziiert ist,
Abrufen eines Anrufmusters (612) eines Benutzers, der mit der angerufenen Nummer assoziiert ist, unter Verwendung der detektierten angerufen Nummer als einen Index in die Datenbank;
Bestimmen, unter Verwendung der Standort- oder Präsenzinformationen, ob das abgerufene Anrufmuster eine Modifizierung zum Routen des Telefonanrufs benötigt; und falls dem so ist, Modifizieren des Anrufmusters unter Verwendung der Standort- oder Präsenzinformationen, um ein Routenmuster (622) für den eingehenden Anruf zu erzeugen, einschließlich einer Reihenfolge von Telefonieeinrichtungen, die mit dem Benutzer assoziiert sind, die sequenziell oder gleichzeitig sein können; und
Auswählen, basierend auf dem Routenmuster, zu welcher von mehreren Telefonieeinrichtungen (70, 280a), die mit dem Benutzer assoziiert sind und als sich in der Nähe des Benutzers befindlich bestimmt wurden, der eingehende Telefonanruf geroutet werden soll.

17. System nach Anspruch 16, wobei der Prozessor ferner dazu ausgelegt ist, mehr als eine Telefonieeinrichtung (70, 280a) auszuwählen und den eingehenden Telefonanruf zu den ausgewählten Einrichtungen gleichzeitig zu routen.

18. System nach Anspruch 16, wobei der Prozessor Telefonieeinrichtungen auswählt durch Bestimmen, basierend auf den Standort- oder Präsenzinformationen und dem abgerufenen Anrufmuster, einer Reihenfolge der mehreren Telefonieeinrichtungen, die mit dem Benutzer assoziiert sind, um Telefonieeinrichtungen zu priorisieren, die als sich in der Nähe des Benutzers befindlich bestimmt wurden, und er den eingehenden Telefonanruf nach der Reihenfolge von Telefonieeinrichtungen sequenziell routet, bis der Anruf angenommen wird (622).

19. System nach Anspruch 18, wobei die mehreren Telefonieeinrichtungen (70, 280a) so geordnet werden können, dass mehr als eine Telefonieeinrichtung gleichzeitig aktiviert sein kann, um den Telefonanruf zu empfangen.

20. System nach Anspruch 16, wobei die Standort- oder Präsenzinformationen Standortinformationen umfassen, die von mindestens einer elektronischen Einrichtung (70, 280a, 280b), die mit dem Benutzer assoziiert ist, oder von einem Dienstanbieter, der mit der mindestens einen elektronischen Einrichtung (70, 280a, 280b) assoziiert ist, erhalten werden.

21. System nach Anspruch 16, wobei die Standort- oder Präsenzinformationen angeben, ob eine der Telefonieeinrichtungen (70, 280a), die mit dem Benutzer assoziiert sind, mit einem Computer (280b), der mit dem Benutzer assoziiert ist, verbunden ist.

22. Computerlesbares Medium, das Anweisungen enthält, die bei Ausführung durch einen Prozessor die Schritte nach einem der Ansprüche 1-15 durchführen.

## Revendications

1. Procédé (610a) d'acheminement d'une communication téléphonique, le procédé comprenant les étapes suivantes :
la détection d'un appel téléphonique entrant vers un numéro de téléphone principal ;
la récupération d'un modèle d'appel d'un utilisateur associé au numéro de téléphone principal (612) ;
la récupération d'informations de localisation ou de présence (270a) associées à l'utilisateur associé au numéro de téléphone principal (620) ;
la détermination, à l'aide des informations de localisation ou de présence, si le modèle d'appel récupéré nécessite d'être modifié pour l'acheminement de l'appel téléphonique ; et, le cas échéant, la modification du modèle d'appel, à l'aide des informations de localisation ou de présence, dans le but de créer un modèle de chemin (622) pour l'appel entrant en cours, notamment un classement de dispositifs de téléphonie associés à l'utilisateur susceptibles d'être appelés séquentiellement ou simultanément ; et
la sélection, sur la base du modèle de chemin, d'un parmi une pluralité de dispositifs de téléphonie (70, 280a) associés à l'utilisateur déterminés comme situés à proximité de l'utilisateur vers lequel il convient d'acheminer l'appel téléphonique entrant.

2. Procédé selon la revendication 1, comprenant en outre la sélection de plus d'un dispositif de téléphonie ; et l'acheminement, sur la base du modèle de chemin, de l'appel téléphonique simultanément vers chacun d'une pluralité de dispositifs de téléphonie (70, 280a) associés à l'utilisateur déterminés comme situés à proximité de l'utilisateur (622).

3. Procédé selon la revendication 1, comprenant en outre la sélection de dispositifs de téléphonie par détermination, sur la base des informations de localisation ou de présence et du modèle d'appel récupéré, d'un classement de la pluralité de dispositifs de téléphonie associés à l'utilisateur dans le but de prioriser des dispositifs de téléphonie déterminés comme situés à proximité de l'utilisateur, et l'acheminement séquentiel, sur la base du modèle de chemin, de l'appel téléphonique selon le classement de dispositifs de téléphonie déterminé jusqu'à ce que l'appel reçoive une réponse.

4. Procédé selon la revendication 2, comportant en outre une étape d'utilisation du modèle d'appel récupéré dans le but de déterminer lesquels de la pluralité de dispositifs de téléphonie (70, 280a) associés à l'utilisateur sont situés à proximité de l'utilisateur.

5. Procédé selon la revendication 2, dans lequel les informations de localisation ou de présence récupérées correspondent à au moins un dispositif électronique (70, 280a, 280b) associé à l'utilisateur.

6. Procédé selon la revendication 5, dans lequel les informations de localisation ou de présence comprennent des informations de localisation obtenues auprès de l'au moins un dispositif électronique (70, 280a, 280b) ou auprès d'un fournisseur de service associé à l'au moins un dispositif électronique (70, 280a, 280b).

7. Procédé selon la revendication 5, dans lequel les informations de localisation ou de présence comprennent des informations d'adresse de protocole Internet (IP) relatives à un deuxième dispositif associé à l'utilisateur.

8. Procédé selon la revendication 2, dans lequel les informations de localisation ou de présence comprennent une indication si l'un des dispositifs de téléphonie (70, 280a) associés à l'utilisateur est connecté ou non à un ordinateur associé à l'utilisateur.

9. Procédé selon la revendication 2, dans lequel les informations de localisation ou de présence comprennent des enregistrements de contrôle d'accès de sécurité associés à l'utilisateur.

10. Procédé selon la revendication 2, dans lequel les informations de localisation ou de présence comprennent des enregistrements de journal d'accès au réseau associés à l'utilisateur.

11. Procédé selon la revendication 3, comportant en outre une étape d'utilisation du modèle d'appel récupéré dans le but de déterminer le classement de la pluralité de dispositifs de téléphonie associés à l'utilisateur.

12. Procédé selon la revendication 3, dans lequel chaque dispositif de téléphonie (70, 280a) est actif pour recevoir l'appel téléphonique pendant une durée prédéterminée avant que le dispositif de téléphonie suivant dans le classement ne soit activé.

13. Procédé selon la revendication 3, dans lequel la pluralité de dispositifs de téléphonie (70, 280a) peuvent être classés de façon à ce que plus d'un dispositif de téléphonie puisse être simultanément actif pour recevoir l'appel téléphonique.

14. Procédé selon la revendication 3, dans lequel l'étape de détermination (622) comporte en outre l'analyse des informations de localisation dans le but de déterminer une destination de l'utilisateur et la priorisation d'éventuels dispositifs de téléphonie associés à la destination.

15. Procédé selon la revendication 3, dans lequel les informations de localisation ou de présence indiquent si l'un des dispositifs de téléphonie associés à l'utilisateur est connecté ou non à un ordinateur associé à l'utilisateur.

16. Système de télécommunication (30), comprenant :
un support d'enregistrement lisible par ordinateur ayant une base de données (270, 270a) comprenant une pluralité de profils d'utilisateur, chaque profil étant associé à un numéro de téléphone principal respectif du système, et une pluralité de modèles d'appel d'utilisateur associés à chaque numéro de téléphone ; et
un processeur configuré pour acheminer un appel téléphonique entrant effectué vers l'un des numéros de téléphone principaux en :
détectant un numéro appelé à partir de l'appel téléphonique entrant,
récupérant des informations de localisation ou de présence (620) associées à l'utilisateur associé au numéro appelé,
récupérant un modèle d'appel (612) d'un utilisateur associé au numéro appelé en utilisant le numéro appelé détecté comme index dans la base de données,
déterminant, à l'aide des informations de localisation ou de présence, si le modèle d'appel récupéré nécessite d'être modifié pour l'acheminement de l'appel téléphonique ; et, le cas échéant, modifiant le modèle d'appel, à l'aide des informations de localisation ou de présence, dans le but de créer un modèle de chemin (622) pour l'appel entrant, notamment un classement de dispositifs de téléphonie associés à l'utilisateur susceptibles d'être séquentiellement ou simultanément ; et
sélectionnant, sur la base du modèle de chemin, l'un parmi une pluralité de dispositifs de téléphonie (70, 280a) associés à l'utilisateur déterminés comme situés à proximité de l'utilisateur vers lequel il convient d'acheminer l'appel téléphonique entrant.

17. Système selon la revendication 16, dans lequel le processeur est configuré en outre pour sélectionner plus d'un dispositif de téléphonie (70, 280a) et acheminer l'appel téléphonique entrant simultanément vers les dispositifs sélectionnés.

18. Système selon la revendication 16, dans lequel le processeur sélectionne des dispositifs de téléphonie en déterminant, sur la base des informations de localisation ou de présence et du modèle d'appel récupéré, un classement de la pluralité de dispositifs de téléphonie associés à l'utilisateur dans le but de prioriser des dispositifs de téléphonie déterminés comme situés à proximité de l'utilisateur, et achemine séquentiellement l'appel téléphonique entrant vers le classement de dispositifs de téléphonie jusqu'à ce que l'appel reçoive une réponse (622).

19. Système selon la revendication 18, dans lequel la pluralité de dispositifs de téléphonie (70, 280a) peuvent être classés de façon à ce que plus d'un dispositif de téléphonie puisse être simultanément actif pour recevoir l'appel téléphonique.

20. Système selon la revendication 16, dans lequel les informations de localisation ou de présence comprennent des informations de localisation obtenues auprès d'au moins un dispositif électronique (70, 280a, 280b) associé à l'utilisateur ou auprès d'un fournisseur de service associé à l'au moins un dispositif électronique (70, 280a, 280b).

21. Système selon la revendication 16, dans lequel les informations de localisation ou de présence indiquent si l'un des dispositifs de téléphonie (70, 280a) associés à l'utilisateur est connecté ou non à un ordinateur (280b) associé à l'utilisateur.

22. Support lisible par ordinateur contenant des instructions qui, une fois exécutées par un processeur, mettent en oeuvre les étapes selon l'une quelconque des revendications 1 à 15.
